Europäisches Patentamt

European Patent Office

Office européen des brevets

(19)

(11) **EP 1 367 538 A2**

(12) **EUROPEAN PATENT APPLICATION**

(43) Date of publication:
**03.12.2003 Bulletin 2003/49**

(51) Int Cl.7: **G06T 5/40**, H04N 9/68

(21) Application number: **03007114.6**

(22) Date of filing: **28.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK RO**

(30) Priority: **29.05.2002 GB 0212367**

(71) Applicant: **EASTMAN KODAK COMPANY
Rochester, New York 14650 (US)**

(72) Inventors:
• **Muammar, Hani, Kodak Limited
Harrow, Middlesex HA1 4TY (GB)**

• **Weldy, John, Eastman Kodak Company
Rochester, New York 14650 (US)**

(74) Representative: **Freeman, Avi
Kodak Limited,
Patent Department
W92-3A,Headstone Drive
Harrow, Middlesex HA1 4TY (GB)**

Remarks:
A request for correction of Fig. 18A has been filed
pursuant to Rule 88 EPC. A decision on the request
will be taken during the proceedings before the
Examining Division (Guidelines for Examination in
the EPO, A-V, 3.).

(54) **Image processing method and system**

(57)     The invention provides a method and system for image processing, comprising the step of estimating a value for one or more clipped channels of one or more clipped pixels in a multi-channel image in dependence on information obtained from the unclipped channels of the one or more clipped pixels and from one or more unclipped pixels near to the one or more clipped pixels. The invention provides a method that enables values for any or all of the channels that have experienced clipping to be estimated.

INPUT IMAGE — 1

IDENTIFY HIGHLIGHT AND SHADOW
CLIP VALUES FOR EACH CHANNEL

IDENTIFY PIXELS WHICH HAVE
CLIPPED IN A SINGLE CHANNEL — 2

FIND NEAR—CLIP PIXELS — 4

USE INFORMATION IN NEAR—CLIPPED
PIXELS AND THE UNCLIPPED CHANNELS
TO ESTIMATE SINGLY CLIPPED PIXELS — 6

IDENTIFY PIXELS WHICH HAVE
CLIPPED IN TWO CHANNELS — 8

FIND NEAR—CLIP PIXELS — 10

USE INFORMATION IN NEAR—CLIPPED
PIXELS AND THE UNCLIPPED CHANNELS
TO ESTIMATE DOUBLY CLIPPED PIXELS — 12

IDENTIFY PIXELS WHICH HAVE
CLIPPED IN ALL THREE CHANNELS — 14

FIND NEAR—CLIP PIXELS — 16

USE INFORMATION IN NEAR—CLIPPED
PIXELS TO SET THE VALUE OF
TRIPLY CLIPPED PIXELS — 18

ADJUST THE TONESCALE OF THE — 20
IMPROVED IMAGES

*FIG. 2*

EP 1 367 538 A2

**Description**

**FIELD OF THE INVENTION**

The present invention relates to a method and system for image processing. In particular the present invention relates to a method and system for image processing of an image in which one or more pixels have experienced clipping.

**BACKGROUND OF THE INVENTION**

The human visual system is known to have a remarkably wide dynamic range. It is capable of accommodating a wide range of real world scene intensities which it achieves by adapting to the average scene lightness. At any single adaptation lightness, the range of intensities which can be accommodated is small in comparison to the range of lightness over which adaptation can occur as discussed in, for example, "Digital Image Processing" by Gonzales and Wintz, Second Edition, 1987, pages 16 to 17.

In contrast a digital image capture device, such as a digital still camera has a comparatively limited dynamic range compared with the overall dynamic range of the human visual system (HVS). It is, however, comparable to the HVS when the HVS is adapted to a single lightness. Even when adapted to a single lightness, the dynamic range of the HVS outperforms the dynamic range of the digital capture device. The range of scene lightness that can be captured by the digital image capture device is limited by the electronics of the capture device e.g. a Charge Coupled Device (CCD). Compromises in the tonal range of the device are therefore made, and the device is often unable to discriminate between small changes in lightness at the extremes of its dynamic range. Consequently, clipping results when scene intensities which are higher (or lower) than the available dynamic range of the capture medium are constrained to the maximum (or minimum) value which can be represented by the medium.

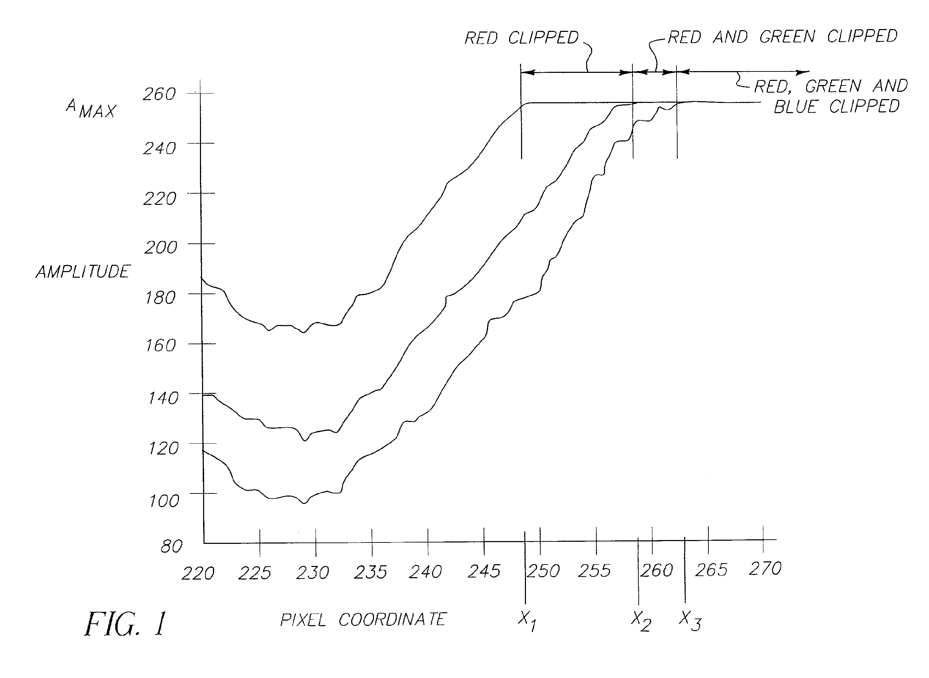

In an analog or digital multi-channel imaging system, typically comprising red, green and blue channels, clipping can occur in one or more channels as shown in Figure 1. Figure 1 shows a graph of the variation of signal amplitude across a line in a tri-colour image demonstrating highlight clipping. The device used to capture this image has a limited dynamic range such that the maximum signal level for any of the three channels is not sufficient to truly represent the scene intensities. The red channel is the first to reach the maximum value $A_{max}$ at position $x_1$ followed by the green and then finally the blue at positions $x_2$ and $x_3$ respectively. When the red channel reaches the value $A_{max}$ the green and blue channels continue to vary across this line in the image. Since the value of the red channel is now fixed at $A_{max}$, the colour balance is adversely affected.

When clipping occurs in only one channel (e.g. red, green or blue) and the other channels are unclipped, the pixel is referred to as singly clipped. When clipping occurs in two channels (e.g. red and green, but blue is unclipped), then the pixel is referred to as doubly clipped. When clipping occurs in all three channels, the pixel is referred to as triply clipped. Highlight clipping, as described with reference to Figure 1 can result in loss of detail and a shift in colour owing to the change in relative amplitudes of the red, green and blue channels. For example, Caucasian skin tone can go reddish yellow in clipped regions. Shadow clipping, in which the dynamic range of the capture device is insufficient to distinguish low scene intensities, can result in a blocking out of detail in the shadow regions of the captured image.

United States Patent number 5,274,439 discloses a method for reducing the effect of hue changes which occur due to clipping in one channel of a colour video signal. In one implementation of the method disclosed therein when one channel of a video signal has clipped, the other channels of the signal are fixed to a constant level equal to the value held by those channels at the instant that the signal was clipped. The channels are fixed until such time that the signal is no longer clipped. In an alternative implementation, an attenuation function is applied to the unclipped colour signal when one colour channel is detected as clipped. The algorithm maintains the hue over the duration of the clipped signal by modifying the unclipped channels of the signal, but does not attempt to estimate the clipped channel in any way.

Hewlett Packard PhotoSmart software™ which is bundled with several of the company's products provides a tool that highlights the clipped pixels in an image. The user of the software can then modify the code level of the clipped pixels until they are no longer clipped. The software does not provide a method of estimating the clipped data in any way.

A method and system is required that enables information that has been lost due to the clipping of one or more channels in pixels of a digital image, to be estimated.

**SUMMARY OF THE INVENTION**

According to a first aspect of the present invention, there is provided a method of image processing, comprising the step of estimating a value for one or more clipped channels of one or more clipped pixels in a multi-channel image in dependence on information obtained from the unclipped channels of the one or more clipped pixels and from one or more unclipped pixels near to the one or more clipped pixels.

Preferably, the method comprises repeating the step of estimating a value for the clipped channel of one or more clipped pixels in a digital image in sequence for pixels with a different single clipped channel.

Preferably, the method further comprises the step of identifying the one or more singly clipped pixels as pixels that satisfy one of the following conditions, for highlight clipping and shadow clipping respectively:

$$(Z \geq (Z_{h,cl} - N_c)) \ \& \ (X \leq (X_{h,cl} - N_c)) \ \& \ (Y \leq (Y_{h,cl} - N_c));$$

or

$$(Z \leq (Z_{s,cl} + N_c)) \ \& \ (X \geq (X_{s,cl} + N_c)) \ \& \ (Y \geq (Y_{s,cl} + N_c))$$

in which X, Y and Z are the values of the channels in each pixel (Z is the value for the singly clipped channel);

$Z_{h,cl}$, $X_{h,cl}$, and $Y_{h,cl}$ are the limit of the range of possible values of Z, X and Y respectively, at which highlight clipping occurs;

$Z_{s,cl}$, $X_{s,cl}$, and $Y_{s,cl}$ are the limit of the range of possible values of Z, X and Y respectively, at which shadow clipping occurs; and,

$N_c$ is a value used to define a clipped threshold. i.e. the value above which (for highlight clipping) or below which (for shadow clipping) a channel is considered clipped.

The one or more unclipped pixels near to the one or more singly clipped pixels may be identified in dependence on their distance from the one or more singly clipped pixels.

This may be achieved by expanding the area covered by the identified singly clipped pixels and subtracting the area covered by the identified singly clipped pixels from this expanded area, and possibly excluding any pixels from the near clipped region that do not satisfy one or more predetermined requirements.

An example of the one or more predetermined requirements is to exclude a pixel if it is within a set number of pixels of a border within the image. A further example of the one or more requirements is if the value of one or more of the channels of the one or more pixels near to the singly clipped pixels is outside a predetermined range.

The area covered by the identified clipped pixels may be expanded using any suitable expansion method. One example is by the action of a structuring element on a binary version of the image.

Preferably, the one or more singly clipped pixels are grouped together in clipped regions and the estimation is performed collectively for each region.

One possible method for grouping together regions of the singly clipped pixels is with the use of an n-component connectivity algorithm or any other suitable connectivity algorithm. Example of values of n are 4 or 8.

Preferably, if the region is larger than a predetermined threshold number of pixels, the clipped pixels therein are estimated, otherwise the region may be ignored. The threshold number of pixels is determined such that the region will be visible to the unaided eye of a viewer in a final output of the image, and if the region comprises less pixels than this, it is not estimated.

Typically, the threshold number of pixels is defined as up to 0.02% of the number of pixels in the image. For example if the image size is 1500 x 1000 pixels, the threshold may be up to 300 pixels.

In one example of the method of the present invention, results from a linear regression are used to determine, by estimation, the value of the clipped channel of the one or more singly clipped pixels. Alternative methods may also be used. For example, results from regressing higher order relationships can be used to estimate values for the clipped channel or channels.

Where the results from a linear regression are used to perform the estimation to estimate the clipped channel values, the inputs to the estimation preferably comprise the unclipped channel value of the singly clipped pixel and regression coefficients $a_0$, $a_1$ and $a_2$, which may be calculated using a least squares method or alternatively an adapted Hough transform.

Preferably, after the regression has been performed and values estimated for the channels of the singly clipped pixels, the tonescale of the estimated singly clipped pixels is adjusted. Examples of methods for adjusting the tonescale of images are described in UK patent application number 0120489.0.

If there is a variation in hue and/or saturation over a singly clipped pixel region, the method comprises the steps of transforming near singly clipped pixels into a transform space and grouping the transformed near singly clipped pixels into areas defined by coordinates in the transform space. Regression coefficients are then calculated for each area and stored in a binning array. Then, coordinates for the singly clipped pixels are determined in the transform space and values for the clipped channel for each region of pixels in the clipped region are estimated using the regression coefficients corresponding to coordinates in the transform space.

In one example, the transform space is delta space in which delta is defined as the difference between the values of the two unclipped channels of the singly clipped pixels. In an alternative example, the transform space is defined in terms of the ratio between the values of the two unclipped channels of the singly clipped pixels.

In a preferred example, the transform space is a 3 dimensional colour space (T-space), defined as follows

$$neu = (r + g + b)/\sqrt{3}$$

$$gm = (2g - r - b)/\sqrt{6}$$

$$ill = (b - r)/\sqrt{2}$$

in which r, g and b are the logarithm of the red, green and blue linear intensities of the image pixels. Linear intensities are obtained by applying an appropriate inverse RGB non-linearity function.

Preferably, the binning array is a 2 dimensional regression binning array defined in terms of gm and ill only, and a corresponding set of regression coefficients $a_0$, $a_1$ and $a_2$ is determined for each gm and ill coordinate in the transform colour space.

In a preferred example, an error signal is generated to account for error in the gm and/or ill coordinates introduced by the loss of data due to the clipped channel in the pixels of the clipped region. The error signal may be generated by a cross correlation between gm,ill histograms of each of the clipped and near clipped pixel regions, the location of the peak in the corresponding correlation space providing the mean correction in each of the gm and/or ill coordinates.

More preferably, the clipped region is subdivided into regions in dependence on a selected parameter and a respective error signal is determined for pixels in each of the subdivided regions. The selected parameter may be the neu value (as defined in T-space).

It is preferred that the clipped region is subdivided into P regions, wherein P is between 2 and 10 inclusive, and wherein an error signal is generated for each subdivided region. The error signal for each subdivided region is determined by a cross correlation between the gm,ill histograms of each of the subdivided clipped regions and the near clipped pixel regions, the location of the peak in the corresponding correlation space providing the mean correction in each of the gm and/or ill coordinates for the pixels in each of the subdivided clipped regions.

In one example, P is calculated in dependence on percentile values of neu for pixels in the clipped region.

Preferably, after values for the clipped channel of any or all singly clipped pixels have been estimated, values are estimated for the clipped channels of one or more doubly clipped pixels by adjusting one or more parameters of the doubly clipped pixels in dependence on information obtained from the unclipped channel of the one or more doubly clipped pixels and from one or more unclipped pixels near to the one or more doubly clipped pixels.

Preferably, the one or more parameters include the hue and/or saturation of the doubly clipped pixels. The step of estimating values for the clipped channels of the one or more doubly clipped pixels comprises the steps of identifying a doubly-clipped pixel region and identifying a near doubly-clipped pixel region. Once the regions have been identified, the method comprises the steps of transforming the near doubly clipped pixel region to an orthogonal colour space e.g. T space as defined above.

After the near doubly clipped pixels have been transformed, a 2-dimensional gm,ill histogram is formed from the near doubly-clipped pixels. Based on the 2-dimensional gm,ill histogram, values of gm and ill $gm_{sel}$ and $ill_{sel}$ that correspond to the representation of the T-space value of the colour of pixels in the clipped region are selected. Finally, new values for the clipped channels in the doubly clipped region in accordance with predetermined equations are estimated.

Where T-space is used as the transform space, and the doubly clipped pixels are clipped in the red and green channels, the equations used to estimate a value for each of the clipped channels are:

$$r_{est} = b - \sqrt{2}.ill_{sel}$$

$$g_{est} = (\sqrt{6}/2)\, gm_{sel} - (1/\sqrt{2})ill_{sel} + b$$

in which b is the logarithm of the blue linear intensity of pixels in the doubly clipped region and $r_{est}$, $g_{est}$ are the estimated values of r and g for pixels in the doubly clipped pixel region.

Where T-space is used as the transform space, and the doubly clipped pixels are clipped in the red and blue channels, the equations used to estimate a value for each of the clipped channels are:

$$r_{est} = g - (1/\sqrt{2}).ill_{sel} - (\sqrt{6}/2).gm_{sel}$$

$$b_{est} = (1/\sqrt{2}).ill_{sel} - (\sqrt{6}/2)\ gm_{sel} + g$$

in which g is the logarithm of the green linear intensity of pixels in the doubly clipped region and $r_{est}$, $b_{est}$ are the estimated values of r and b for pixels in the doubly clipped pixel region.

Where T-space is used as the transform space, and the doubly clipped pixels are clipped in the blue and green channels, the equations used to estimate a value for each of the clipped channels are:

$$g_{est} = (1/\sqrt{2}).ill_{sel} + (\sqrt{6}/2).gm_{sel} + r$$

$$b_{est} = \sqrt{2}.ill_{sel} + r$$

in which r is the logarithm of the red linear intensity of pixels in the doubly clipped region and $g_{est}$, $b_{est}$ are the estimated values of g and b for pixels in the doubly clipped pixel region. Estimated linear values $R_{est}$, $G_{est}$ and $B_{est}$ of the clipped channels, derived from the estimated log values $r_{est}$, $g_{est}$ and $b_{est}$, are constrained to a predetermined range.

Preferably, the values of gm and ill selected based on the 2-dimensional gm,ill histogram, are the respective mode values $gm_{mode}$ and $ill_{mode}$ i.e. the most frequently occurring values of gm and ill.

It is preferred that the step of identifying a doubly-clipped pixel region comprises the step of identifying pixels that satisfy one of the following conditions for highlight clipping and shadow clipping, respectively:

$$(X \geq (X_{h,cl} - N_c))\ \&\ (Y \geq (Y_{h,cl} - N_c))\ \&\ (Z \leq (Z_{h,cl} - N_c))$$

or,

$$(X \leq (X_{s,cl} + N_c))\ \&\ (Y \leq (Y_{s,cl} + N_c))\ \&\ (Z \geq (Z_{s,cl} + N_c))$$

in which X, Y and Z are the values of the channels in each pixel;
$X_{h,cl}$, $Y_{h,cl}$ and $Z_{h,cl}$ are the limit of the range of possible values of X, Y and Z respectively at which highlight clipping occurs;
$X_{s,cl}$, $Y_{s,cl}$ and $Z_{s,cl}$ are the limit of the range of possible values of X, Y and Z respectively at which shadow clipping occurs; and,
$N_c$ is a value used to define a clipped threshold.

Preferably, the step of identifying a near doubly clipped region of pixels within the image comprises selecting one or more unclipped pixels near to the one or more doubly clipped pixels, identified in dependence on their distance from the one or more doubly clipped pixels.

The one or more unclipped pixels near to the one or more doubly clipped pixels are identified by expanding the area covered by the identified doubly clipped pixels by a predetermined proportion and subtracting the area covered by the identified doubly clipped pixels.

The step of identifying the near doubly clipped region of pixels, may further comprise, after the step of expanding the area covered by the identified doubly clipped pixels, the step of excluding any pixels from the near doubly clipped region that do not satisfy one or more predetermined requirements.

Preferably, values for pixels having each of the possible combinations of doubly clipped channels are estimated in sequence.

Preferably, the method further comprises the step of, after the values for the clipped channels of any or all doubly clipped pixels have been estimated, estimating values for the clipped channels of one or more triply clipped pixels in a multi-channel image in dependence on information obtained from one or more unclipped pixels near to said one or more triply clipped pixels.

The step of identifying triply clipped pixels may be executed by selecting all pixels that satisfy one of the two following requirements, for highlight clipping and shadow clipping respectively

$$(X \geq (X_{h,cl} - N_c)) \ \& \ (Y \geq (Y_{h,cl} - N_c)) \ \& \ (Z \geq (Z_{h,cl} - N_c))$$

or,

$$(X \leq (X_{s,cl} + N_c)) \ \& \ (Y \leq (Y_{s,cl} + N_c)) \ \& \ (Z \leq (Z_{s,cl} + N_c))$$

in which X, Y and Z are the values of the channels in each pixel;

$X_{h,cl}$, $Y_{h,cl}$ and $Z_{h,cl}$ are the limit of the range of possible values of X, Y and Z respectively at which highlight clipping occurs;

$X_{s,cl}$, $Y_{s,cl}$ and $Z_{s,cl}$ are the limit of the range of possible values of X, Y and Z respectively at which shadow clipping occurs; and,

$N_c$ is a value used to define a clipped threshold.

Preferably, the method further comprises the step of forming triply clipped pixel regions where the number of connected triply clipped pixels is greater than a predetermined amount, say up to 0.02% of the number of pixels in the image.

The one or more unclipped pixels near to the one or more triply clipped pixels may be identified in dependence on their distance from the one or more triply clipped pixels.

A similar method to that used in identifying near singly clipped and near doubly clipped pixels may be used to identify near triply clipped pixels.

Preferably, the method according to the present invention, further comprises the step of forming an R, G, B histogram (in which R, G, B are the values for the colour channels in the pixels) of pixels in the near triply clipped pixel region and determining therefrom selected values $R_{sel}$, $G_{sel}$ and $B_{sel}$ representative of R, G, B values of the near triply clipped pixels. Most preferably, the selected values $R_{sel}$, $G_{sel}$ and $B_{sel}$ are chosen such that they are the most commonly occurring value of R, G and B ($R_{mode}$, $G_{mode}$ and $B_{mode}$) in the histogram.

The method then comprises the step of setting the RGB values of all pixels in the triply clipped pixel region to the values of $R_{sel}$, $G_{sel}$ and $B_{sel}$.

In an alternative example, parameters of a surface model are determined from the region of near triply clipped pixels and the surface model is applied to the region of triply clipped pixels. The parameters may be determined using any suitable method e.g. a least squares method.

Preferably, after values have been estimated for the channels of the doubly and/or triply clipped pixels, the tonescale of the estimated pixels is adjusted.

According to a second aspect of the present invention, there is provided a digital image processor comprising processing means adapted to estimate a value for a clipped channel of one or more singly clipped pixels in a digital image in dependence on information obtained from the unclipped channels of the one or more singly clipped pixels and from one or more unclipped pixels near to the one or more singly clipped pixels.

The processor is preferably adapted to group together the one or more singly clipped pixels in clipped regions and estimate values for the channels of pixels in the clipped region collectively. The processor is controlled such that when there is a variation in hue and/or saturation over a singly clipped pixel region, it is adapted to transform near singly clipped pixels into a related transform space and then group the transformed near singly clipped pixels into areas defined by coordinates in the transform space. After this, the processor calculates regression coefficients for each area and stores the regression coefficients in a binning array. Coordinates in the transform space are then determined for the singly clipped pixels such that a value for the clipped channel for each region of pixels in the clipped region can be estimated using the regression coefficients corresponding to a group of the transformed near singly clipped pixels in the transform space.

At pixels with a clipped channel, non-clipped channel values and regression coefficients, that can vary depending on the non-clipped channel values, are used to calculate, by estimation, a value for the clipped channel.

The processor is preferably further adapted to, after values have been estimated for the clipped channels of any or all singly clipped pixels, estimate values for the clipped channels of one or more doubly clipped pixels by adjusting one or more parameters of the doubly clipped pixels in dependence on information obtained from the unclipped channel of the one or more doubly clipped pixels and from one or more unclipped pixels near to one or more doubly clipped pixels.

More preferably, the processor is further adapted, after values have been estimated for the clipped channels of any or all doubly clipped pixels, to estimate values for the clipped channels of one or more triply clipped pixels in a digital image in dependence on information obtained from one or more unclipped pixels near to the one or more triply clipped pixels.

According to a further aspect of the present invention, there is provided a digital camera, comprising capture means to capture a pixelated digital image of an object and processing means adapted to estimate a value for the clipped channel of one or more singly clipped pixels in the pixelated digital image. The value is estimated in dependence on information obtained from the unclipped channels of the one or more singly clipped pixels and from one or more unclipped pixels near to the one or more singly clipped pixels.

The processing means is further adapted to estimate values for the channels of doubly clipped pixels from said pixelated image by adjusting a parameter of the doubly clipped pixels to blend with that of surrounding unclipped pixels after values for the clipped channels of any or all singly clipped pixels have been estimated.

The processing means is further adapted to estimate values for the clipped channels of any or all triply clipped pixels by blending said triply clipped pixels in with surrounding near triply clipped pixels after values have been estimated for the clipped channels of any or all doubly clipped pixels.

The processing means may be any suitable processing means such as a programmed microprocessor or an ASIC.

According to a further aspect of the present invention, there is provided a digital photofinishing system, comprising input means to receive a pixelated digital image to be processed; and,

processing means adapted to estimate a value for a clipped channel of one or more singly clipped pixels in the pixelated digital image in dependence on information obtained from the unclipped channels of the one or more singly clipped pixels and from one or more unclipped pixels near to the one or more singly clipped pixels.

Preferably, the processing means is further adapted to estimate values for the clipped channels of one or more doubly clipped pixels from the pixelated image by adjusting a parameter of the doubly clipped pixels to blend with that of surrounding unclipped pixels after any or all singly clipped pixels have been estimated.

Preferably, the processing means is further adapted to estimate values for the clipped channels of any or all triply clipped pixels by blending the triply clipped pixels in with surrounding near triply clipped pixels after values have been estimated for the clipped channels of any or all doubly clipped pixels.

Preferably, the processing means comprises a computer in communication with an image processing algorithm database, comprising one or more image processing algorithms, at least one of which, when run on the computer causes the computer to execute the steps of the method of the present invention on a received image.

Preferably, the digital photofinishing system comprises output means such as a CD writer, or a digital photographic printer for writing the processed image onto photographic material adapted to produce an output format of the processed image.

According to a further aspect of the present invention there is provided a computer program comprising program code means for performing all the steps of the method of the present invention when the program is run on a computer. The invention also comprises a computer program product comprising program code means stored on a computer readable medium for performing the method of the present invention when the program product is run on a computer.

According to a further aspect of the present invention there is provided a method of image processing, comprising the step of identifying pixels in a multi-channel image where at least one channel value is clipped. A relationship based on channel values from pixels that are not clipped is generated and then applied to declip clipped channel values at the identified pixels.

**ADVANTAGEOUS EFFECT OF THE INVENTION**

The present invention provides a method of image processing capable of providing an estimate of data lost due to the clipping of pixels in images e.g. digital images. The invention enables data to be estimated based only on available data from channels in the clipped pixels which have not been clipped and from near pixels in the image that have not been clipped.

In contrast to conventional image processing methods, the present invention provides a method, which is capable of estimating data that has been lost owing to clipping at either end of the dynamic range of a captured scene. In other words, the present invention provides a method capable of estimating data that has been lost either because the true representation of the original scene has higher or lower values than was captured.

**BRIEF DESCRIPTION OF THE DRAWINGS**

Examples of the present invention will now be described with reference to the accompanying drawings, in which:

Figure 1 shows a graph of the variation of signal amplitude across a line in an image demonstrating highlight clipping;

Figure 2 is a flow diagram showing the steps in the image processing method of the present invention;

Figure 3 is a flow diagram showing the steps of a first stage of the image processing method of the present invention;

Figure 4 shows a schematic representation of an image having a singly clipped region;

Figure 5 is a flow diagram showing the steps of a first stage of the image processing method of the present invention

Figure 6 shows a one dimensional regression binning array used in one example of the method of the present invention;

Figure 7 shows a two dimensional regression binning array used in one example of the method of the present invention;

Figure 8 shows a schematic representation of an estimation process used in the present invention;

Figures 9A shows an example of a plot of variation of signal amplitude with respect to position across a region of an image in which the red channel has clipped;

Figures 9B shows an example of a plot of variation of signal amplitude with respect to position in which the singly clipped red channel from Figure 9A has been estimated according to the method of the present invention;

Figure 10 shows an example of a gm, ill histogram for a region of near clipped pixels in a digital image;

Figure 11 shows the corresponding gm, ill histogram for the region of clipped pixels in the digital image;

Figure 12 shows the cross correlation of the histograms of Figures 10 and 11;

Figure 13 is a flow diagram showing the steps in an estimation method used in the method of the present invention;

Figure 14 shows a schematic representation of a clipped region of a digital image;

Figure 15 shows a schematic flow diagram of the steps in estimating doubly clipped pixels according to the method of the present invention;

Figure 16 shows a schematic flow diagram of a summary of the steps in estimating doubly clipped pixels within an image according to the method of the present invention;

Figure 17 is a block diagram showing an example of an image processing system according to the present invention;

Figure 18 is a flow diagram showing the steps in a pixel-correction algorithm used in the present invention; and,

Figure 19 shows an example of a digital camera according to the present invention.

## DETAILED DESCRIPTION OF THE INVENTION

The present invention provides a method of processing a multi-channel image which has values that have experienced clipping in one or more of their channels and where the clipping may have occurred in the highlight and/ or shadow regions of the image. The invention can be applied to still images or to video and/or temporal images, where, in the case of video or temporal images, the invention can be applied on a frame-by-frame basis. For example, in the case of a digital image, if the pixels comprise distinct red, green and blue (RGB) channels and clipping has occurred in one or more of these channels, the present invention provides a method of estimating (or reconstructing) information lost due to the clipping.

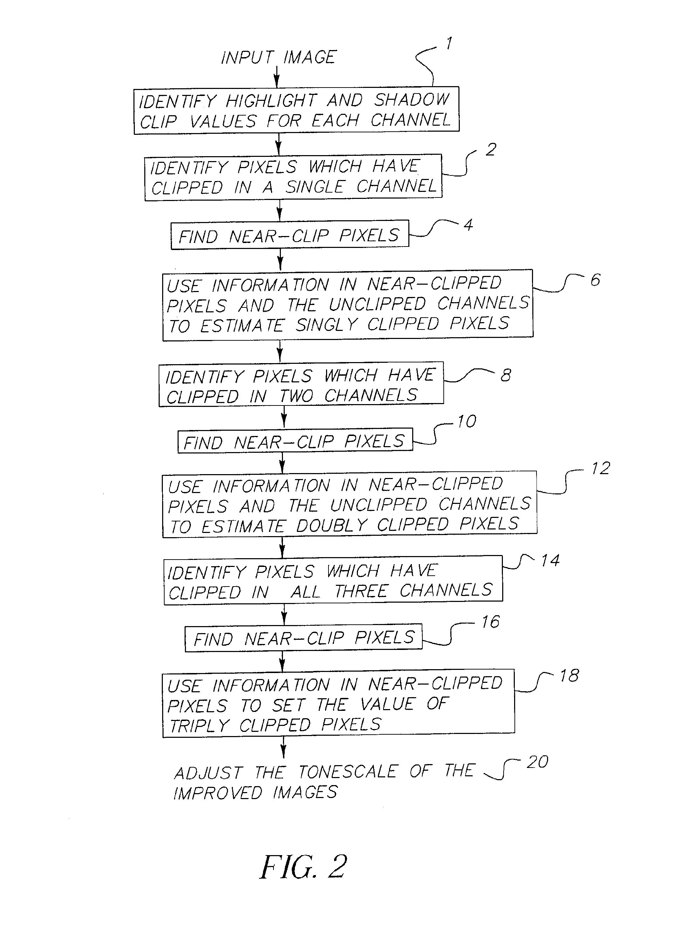

Figure 2 is a flow diagram showing an overview of the steps in the image processing method of the present invention. The steps described apply to the estimation of highlight and shadow clipped pixels. Firstly, in step 1, the value at which pixels clip in the shadow and highlight regions of the image for each channel is found. Secondly, in step 2 pixels which have clipped in a single channel are identified and clusters of connected singly clipped pixels are formed into regions. In the case where both highlight and shadow clipped pixels exist in the image, the highlight and shadow clipped pixels cannot form part of the same region, and independent highlight and shadow singly clipped regions are formed. In step 4, for each region of identified singly clipped pixels a set of near-clipped pixels is found. A region of near-clipped pixels is defined as the set of pixels that are near (i.e. in close proximity to) the clipped pixel region. Additionally, pixels that have code values that are within a predetermined range of the clipped pixel code value may be defined as near-clipped and therefore included in a near-clipped region.

Then, in step 6, using information contained in the near-clipped pixels and the unclipped channels of the singly clipped pixels, a value for the clipped channel is estimated. Initially this is done for, say, all the singly red clipped pixels. Once values for the singly red clipped pixels have been estimated, values are estimated for pixels having a different, e.g. green, singly clipped channel. This is repeated for regions of pixels of every singly clipped channel. In other words, the present invention provides a method by which values for singly clipped pixels in a digital image may be estimated based on information obtained from the unclipped channels of the clipped pixel in combination with information from unclipped pixels near to the clipped pixel. Examples of specific algorithms suitable for achieving this are described in detail below.

When values have been estimated for all the regions of singly clipped pixels, in step 8, pixels which have clipped values in two channels are identified and regions of doubly clipped pixels are formed. Where both highlight and shadow doubly clipped pixels exist in the image, the highlight and shadow pixels cannot form part of the same regions, and independent highlight and shadow doubly clipped regions are formed. Like in step 4, in step 10, the near doubly-clipped pixels are found for each region of doubly clipped pixels. Then in step 12, using information contained in the near doubly-clipped pixels found in step 10 and the unclipped channel of the doubly clipped pixel regions, values for the clipped channels are estimated. This is repeated for each combination of doubly clipped pixel e.g. pixels that are clipped in the red and green channels but are unclipped in the blue channel, pixels that are clipped in the green and blue channels but are unclipped in the red channel and pixels that are clipped in the blue and red channels but are unclipped in the green channel.

When values have been estimated for all the regions of doubly clipped pixels, in step 14, pixels which have clipped values in all three channels are identified and connected triply clipped pixels are formed into regions. As with singly and doubly clipped pixels highlight and shadow triply clipped pixels cannot form part of the same region, and independent highlight and shadow triply clipped regions are formed. In step 16, for each region of triply clipped pixels, the set of near triply-clipped pixels is found. Then in step 18 using information contained in the near triply-clipped pixels the triply clipped region is modified to blend it with the surrounding neighbourhood pixels. Finally, in step 20, the tonescale of the image is reshaped for rendering to an output device such as a monitor or printer.

Values for the clipped channel of singly clipped pixels can be estimated using information contained in a near singly-clipped pixel region, and the unclipped channels of the singly clipped pixel. For example, if a pixel is clipped in the green channel, then information obtained from pixels in the near singly clipped region is combined with information from the red and blue channels of the clipped pixel and is used to estimate a value for the green channel.

The region of near singly-clipped pixels is identified by analysing data from the digital image in a non-linear RGB space such as sRGB. This is one possible example of an RGB viewing space. Use of sRGB ensures that an image displayed on a calibrated monitor is perceived optimally by a viewer under typical (reference) viewing conditions. The analysis and estimation of clipped pixels is conducted in a linear image space. The linear RGB signal is obtained by applying the appropriate inverse non-linearity function to the RGB signal. In the case of an sRGB image, linear sRGB values can be obtained by applying the sRGB inverse non-linearity function to the sRGB image. When sRGB data are converted to linear space, the data will range between 0 and 1.0. Highlight clipped pixels are estimated to values beyond the highlight clipped value between 1.0 (if the clipped value is equal to 1.0) and an upper limit of 1.8. Shadow clipped pixels are estimated to values below the shadow clipped value between 0 (if the clipped value is equal to 0) and a lower limit of -0.8. The upper (for highlight) and lower (for shadow) limits are set arbitrarily but ensure that the estimated pixels are not set to unreasonably high or low values respectively.

A detailed description of the invention is given below for the case of estimating singly, doubly and triply clipped pixels that are clipped in the highlights. The case of estimating values for clipped channels of shadow clipped pixels follows by analogy from the method for estimating values for the clipped channels of highlight clipped pixels, and is described below. For any colour channel of an RGB image, given a set of near singly-clipped pixels with constant hue and saturation and variable luminance, a linear relationship between the clipped channel and the unclipped channels can be determined. Once the linear relationship has been determined, it may be extrapolated to enable an estimate of lost data to be made.

The relationship may be determined using the method of multivariate least squares regression as described in 'Advanced Engineering Mathematics, 8th Edition', by E Kreyszig, John Wiley & Sons, 1999, p1145-1147. This reference gives an example for the method of least squares as applied to a straight line, i.e. a single variable, however it can be easily extended to multiple variables.

If for a singly clipped pixel the clipped channel value is Z, and the unclipped channel values are X, and Y, then for the example of linear multivariate regression, where:

$$Z = a_0 + a_1 X + a_2 Y \tag{1}$$

the coefficients $a_0$, $a_1$ and $a_2$ can be derived from the near-clipped data using the standard least squares technique. Once the coefficients are known, equation 1 can be extrapolated to enable an estimate of the clipped channel value Z to be obtained. In other words, extrapolation is used as a method to enable lost data to be estimated. Higher order relationships can also be utilized.

An estimate of the clipped channel value, Z, of a singly clipped pixel with hue and saturation equal to the hue and saturation of the near clipped pixels can be made by substituting the non-clipped channel values (X and Y) into equation (1) using the coefficients, $a_0$, $a_1$ and $a_2$ derived from the near-clipped pixels. The channel values ZXY refer to RGB (red, green, blue) when estimating the red channel value, GRB when estimating the green channel value and BRG when estimating the blue channel value. Alternative assignment of RGB to ZXY may be used e.g. ZXY=RBG.

The regression equations used to calculate the corresponding signal level for each one of the clipped channels, based on regression coefficients derived from the near clip pixels and information from the other two channels of the clipped pixel are:

For red singly clipped pixels:

$$R_{est} = a_0 + a_1 G + a_2 B$$

For green singly clipped pixels:

$$G_{est} = a_0 + a_1 R + a_2 B$$

For blue singly clipped pixels:

$$B_{est} = a_0 + a_1 R + a_2 G$$

Where $R_{est}$, $G_{est}$, $B_{est}$ are the estimated red, green and blue channel values of the singly clipped pixel and R, G, B are the values of the unclipped channels of the corresponding singly clipped pixel.

Using least squares, the normal equations used to determine the coefficients $a_0$, $a_1$ and $a_2$ are found to be:

$$\sum_{i=1}^{N} z_i = a_0 N + a_1 \sum_{i=1}^{N} x_i + a_2 \sum_{i=1}^{N} y_i$$

$$\sum_{i=1}^{N} z_i x_i = a_0 \sum_{i=1}^{N} x_i + a_1 \sum_{i=1}^{N} x_i^2 + a_2 \sum_{i=1}^{N} x_i y_i$$

$$\sum_{i=1}^{N} z_i y_i = a_0 \sum_{i=1}^{N} y_i + a_1 \sum_{i=1}^{N} x_i y_i + a_2 \sum_{i=1}^{N} y_i^2$$

in which $x_i$, $y_i$ and $z_i$ are the linear RGB data elements in the set of N near singly clipped pixels. These equations can be rewritten in matrix form, which enables the coefficients $a_0$, $a_1$ and $a_2$ to be determined.

In one example of image processing according to the present invention, the level is determined at which pixels in the Z, X and Y channels clip. For highlight clipping, this is done by selecting the maximum values $Z_{h,cl}$, $X_{h,cl}$, and $Y_{h,cl}$ of Z, X and Y respectively, in the image. A lower clip threshold for each channel is defined. The lower clip threshold is selected such that the difference $N_c$ between the lower clip threshold and the clip values for the corresponding channel (i.e. $Z_{h,cl}$, $X_{h,cl}$, and $Y_{h,cl}$) is a number of code values between 0 and a suitably selected number in dependence on the image or capture device used to capture the image. The value of $N_c$ is normally set to 3 code values for sRGB images.

To estimate the channel Z, where highlight clipping has occurred and where Z is any of R, G or B, all pixels are identified in the sRGB image which satisfy the following constraint:

$$(Z \geq (Z_{h,l} - N_c)) \ \& \ (X < (X_{h,cl} - N_c)) \ \& \ (Y < (Y_{h,cl} - N_c)) \tag{2}$$

If the percentage of clipped pixels is less than a predetermined value, say 0.02% of the total number of pixels in the image then no estimation of the specific channel is required. After individual clipped pixels have been identified, clipped regions are formed from connected clipped pixels. This can be done, for example, using a 4-component connectivity algorithm or any other suitable algorithm e.g. 8-component connectivity algorithm.

Optionally, all clipped regions containing fewer than a threshold number of pixels, say 0.02% of the total number of pixels in the image, are ignored at this stage.

As will be explained below, for each region having a clipped channel Z, the set of near singly-clipped pixels for the region is identified using a suitable method. The regression coefficients $a_0$, $a_1$ and $a_2$ are then determined from the near clipped pixels and the Z channel of each pixel in the clipped region is estimated based on the determined values of the coefficients $a_0$, $a_1$ and $a_2$.

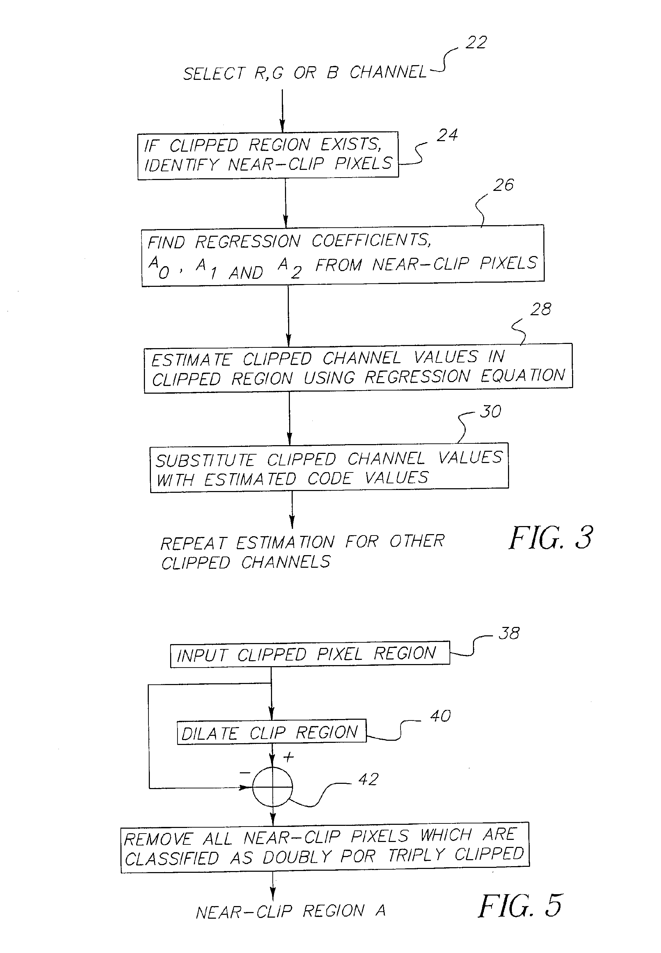

Figure 3 is a flow chart showing an overview of the steps for estimating singly clipped pixels used in the image processing method of the present invention. Firstly, in step 22, a channel (red, green or blue) is selected. Next, in step 24 if a clipped region exists, a near clipped region corresponding to the clipped region is identified. Then, in step 26, regression coefficients $a_0$, $a_1$ and $a_2$ are calculated based on the near clip pixels identified in step 24. Values for the clipped channel are then estimated based on the regression coefficients $a_0$, $a_1$ and $a_2$ and at step 30 the estimated code values are substituted for the clipped channel values. The process is repeated for all channels containing clipped regions..

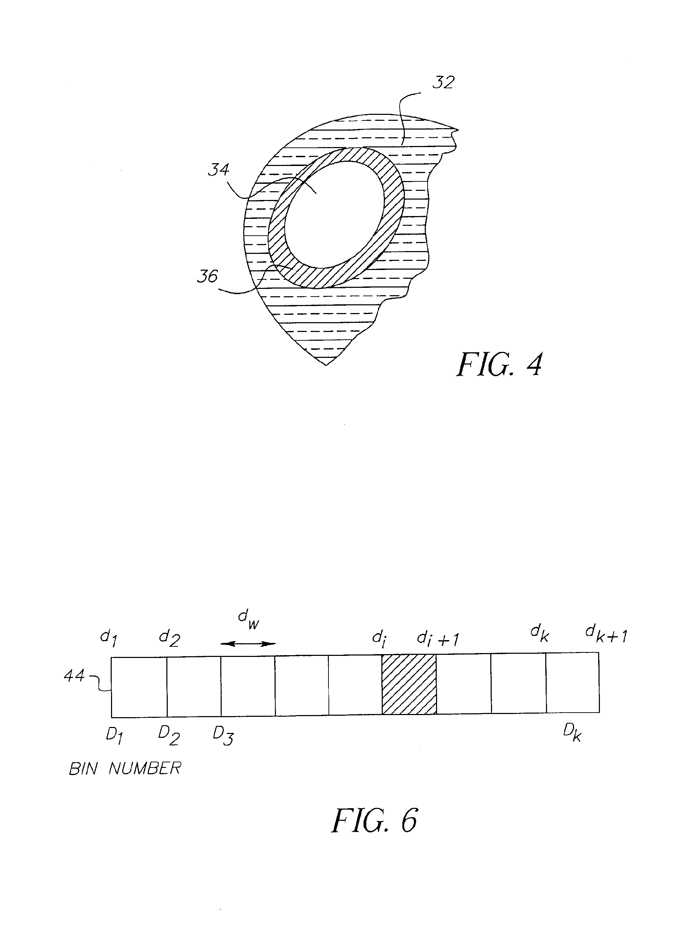

Figure 4 shows a schematic representation of an image having a singly clipped region. The original scene 32 is of constant hue and saturation but owing to the way the subject has been illuminated and due to limitations of the capture device used to capture the scene intensities, a singly clipped region 34 is apparent. Near clipped region 36, in this case surrounding the clipped region 34, is the region comprising the set of near clipped pixels corresponding to the region 34 of singly clipped pixels.

Figure 5 is a flow diagram showing a first stage of one possible method for determining the set of near clipped pixels for a region of singly clipped pixels, assuming that channel Z is being estimated and channels X and Y are unclipped. The values at which the channels Z, X and Y clip correspond to $Z_{h,cl}$, $X_{h,cl}$, and $Y_{h,cl}$ respectively.

Referring to Figure 5, at step 38, a binary image version of the singly clipped pixel region is created and input to the process. At step 40, the region input in step 38 is dilated using a 6x6 structuring element as described in 'Digital Image Processing, Second Edition' by Pratt WK, John Wiley & Sons, 1991, p.472, or using any other suitable enlargement process or algorithm. At step 42, the original binary image is subtracted from the dilated region.

All pixels from the result of the subtraction which are classified as doubly or triply clipped pixels are excluded from the region. Pixels which are doubly or triply clipped are outliers and are preferably excluded from the regression. Any pixels which are less than or equal to a distance of L pixels from the image border (outside edge) are excluded from the region. This is done because the output device or application which generated the image may have added border pixels that can be mistakenly classified as near singly clipped pixels. Typically, L is set equal to 10 pixels, but can vary depending on the output device or application. A first near clipped region A is thereby defined although further processing is required to clearly identify the near clip region for use in the determination of the regression coefficients $a_0$, $a_1$ and $a_2$.

A second stage of determining the near singly-clipped pixel region for use in the determination of the regression coefficients $a_0$, $a_1$ and $a_2$ is now described. The binary map of the singly clipped pixel region input at step 38 in Figure 5 is eroded. Any suitable erosion may be used such as a morphological binary erosion using a 3x3 structuring element, a typical example being that described at page 472 of 'Digital Image Processing, Second Edition' by Pratt WK, John Wiley & Sons, 1991. The region formed by the difference between the original and the eroded binary image is found. All pixels in the difference between the original and the eroded binary images which are adjacent to a region of doubly or triply clipped pixels (a) are excluded from the region. In addition, any pixels (b) which are less than or equal to a distance of L pixels from the image border are excluded from the region.

The remaining pixels in the difference between the original and the 3x3 eroded binary image that have not been excluded by either of the two conditions (a) and (b) form a set (c) of sRGB pixels. Histograms of the unclipped channel values, X and Y, of the set of pixels (c) are formed. The mode values of the X channel histogram, $X_{mode}$, and Y channel histogram, $Y_{mode}$, are found.

For highlight clipping, the subset of pixels from near clipped region A that match the following criteria is found:

$$(Z_{h,cl} - N_d) \le Z < (Z_{h,cl} - N_c) \,\&\, (Y_{mode} - 0.75\,N_d) \le Y \le (Y_{mode} + 0.25\,N_d) \,\&$$

$$(X_{mode} - 0.75\,N_d) \le X \le (X_{mode} + 0.25\,N_d) \tag{3}$$

in which $Z_{h,cl}$ is the value at which the Z channel clips in the image, and $N_d$ is a suitably selected threshold code value e.g. 45 for sRGB images. This subset of pixels is defined as the set of near singly clipped pixels which is used to determine the regression coefficients $a_0$, $a_1$ and $a_2$.

Typically, scenes can vary in colour over a clipped region. For example, in portrait scenes, faces often clip in images captured on low-end digital cameras. Face pixels are most likely to vary in hue over the clipped and near clipped pixel regions. Multiple sets of regression coefficients are therefore needed to estimate a clipped region, which varies in hue and/or saturation.

Figure 6 shows a regression binning array 44 used in one possible method for estimating chromatic singly clipped regions based on multivariate least squares in which there is variation of hue and/or saturation across a clipped and near clipped region. A delta image, d, is defined as the difference of the unclipped channels in the singly clipped pixels. For example, in the case of Z clipped, but X and Y unclipped, then:

$$d = X - Y \qquad (4)$$

The regression binning array 44 as shown in Figure 6 containing K bins is configured (Typically K is equal to 9 or 10). Each bin in the array is used to store a set of regression coefficients such as $a_0$, $a_1$, $a_2$. The delta values for the region of near singly-clipped pixels is calculated based on equation (4). The minimum and maximum delta value, $d_{min}$, and $d_{max}$, are found.
The width of a bin in the delta regression binning array, $d_w$ is calculated as:

$$d_w = (d_{max} - d_{min})/K \qquad (5)$$

The near clipped pixels are subdivided into K groups based on their delta (X - Y) value. Then regression coefficients are calculated for each group and saved in the regression binning array. In the following pseudo code, the regression binning array is D, where $D_i$ refers to the $i^{th}$ element in the array and i=1,2,3... K.

for i=1 to K

    - Select the set of near-clipped pixels $Q_i$ such that delta value of a near-clip pixel, $d_{nc}$ satisfies the condition: $(d_i \leq d_{nc} < d_{i+1})$, where $d_i = (i-1)d_w + d_{min}$

    - Calculate regression coefficients, $a_0$, $a_1$, $a_2$ from the subset of pixels $Q_i$.

    - Store the coefficients $a_0$, $a_1$, $a_2$ in bin $D_i$.

    end

If any bin in the regression-binning array is unpopulated, it is populated by forming a set of regression coefficients $a_0$, $a_1$, $a_2$ from neighbouring elements in the binning array. For example, an unpopulated bin can be set equal to its nearest populated bin, or linear or higher order interpolation functions can be used to interpolate an unpopulated bin.

Once the regression binning array has been fully populated, clipped pixels are estimated. To estimate a clipped channel value, the delta value (X -Y) from the unclipped channels of the clipped pixel, $d_c$ is calculated. Next, the value i, is found where the condition:

$$d_i \geq d_c > d_{i+1} \qquad (6)$$

is satisfied. A corresponding set of coefficients $a_0$, $a_1$, $a_2$ is selected by referencing the corresponding cell $D_i$ in the regression binning array. Once a set of coefficients $a_0$, $a_1$, $a_2$ has been selected, a value for the estimated channel Z for the corresponding pixels is calculated by substitution of the values X and Y from those pixels together with the selected regression coefficients into equation (1). Finally, the estimated channel Z is constrained within predetermined limits. The estimation of the clipped channel can be described as:

$$Z = A_0(d_c) + A_1(d_c).X + A_2(d_c).Y \qquad (7)$$

where $A_0(d_c)$, $A_1(d_c)$ and $A_2(d_c)$ refer to the coefficients $a_0$, $a_1$ and $a_2$, respectively, that are stored in regression binning array element $D_i$. The index, i, is the value that satisfies the condition described in equation (6) given $d_c$.

Alternative relationships between the two known channels X and Y of a singly clipped pixel may be used to define a suitable transform space for implementation of this method. For example a variable f may be defined as the ratio of the two unclipped channels such that f = X/Y. In which case, a corresponding set of regression coefficients $a_0$, $a_1$, $a_2$ would be determined for each indexed value $f_i$ of f. The size of the array is relatively small and therefore the memory requirements for a processor (described below) used to execute the steps of the method of the present invention are correspondingly small, which is desirable.

The method described above for selecting regression coefficients for some value $d_c$ using a regression binning array, is equivalent to a method of nearest neighbour interpolation. It is possible to use higher order methods to interpolate a set of regression coefficients from neighbouring cells for some value $d_c$.

An alternative method, which can provide more robust estimation when the clipped object varies in hue and saturation, is to transform the near-clipped and clipped pixel regions to an orthogonal colour space. One possible example of an orthogonal colour space suitable for use in the method of the present invention is "T-space". T-space comprises neutral (neu), green-magenta (gm) and illuminant (ill) channels. The neu component computes luminance and the gm and ill components, colour. The gm and ill components vary independently of intensity. The transform is given as follows:

$$neu = (r + g + b)/\sqrt{3} \tag{8}$$

$$gm = (2g - r - b)/\sqrt{6}$$

$$ill = (b - r)/\sqrt{2}$$

Where r, g and b are the logarithm of the red, green and blue linear intensities.

Further examples of orthogonal colour spaces include CIELAB or CIELUV. However, these spaces can be computationally more complex to implement than T-space.

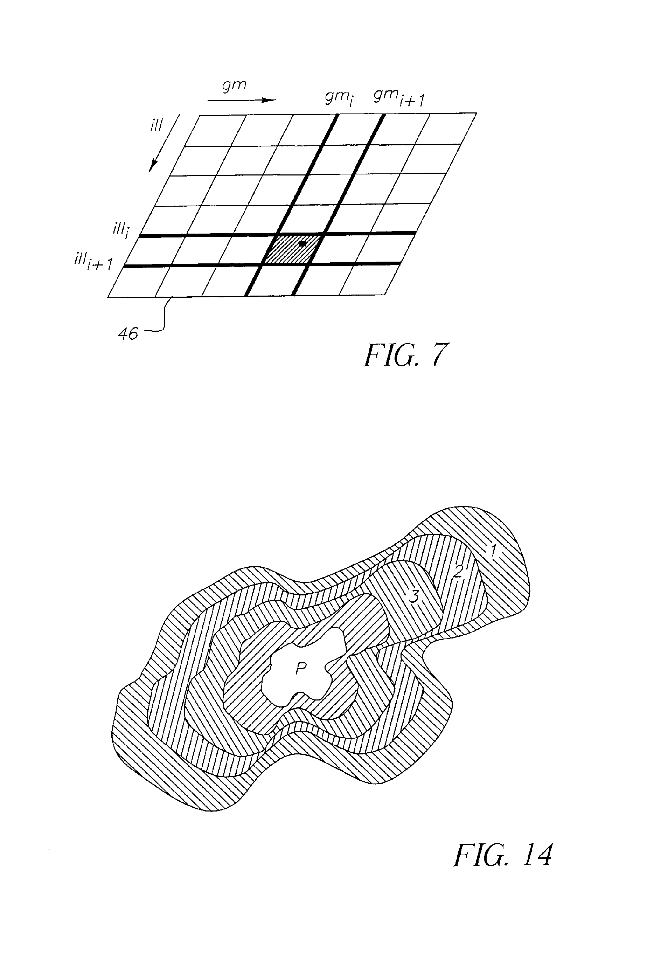

Figure 7 shows a two dimensional regression binning array used in an alternative method for estimating chromatic singly clipped pixel regions based on the multivariate least squares in which there is variation of hue and/or saturation across a clipped and near clipped region.

A two dimensional regression binning array, H, 46 is formed. Each cell in the array is capable of storing a set of regression coefficients $a_0$, $a_1$, $a_2$. The number of columns and rows is equal to K and M respectively. Typically, these are of the order of 9 or 10. The column axis corresponds to gm and the row axis ill.

The T-space transform for the region of near singly-clipped pixels is calculated. The maximum and minimum gm and ill values $gm_{max}$, $gm_{min}$ and $ill_{max}$ and $ill_{min}$ are found using the known R,G and B values together with the transform equations (8).

The bin intervals, $gm_w$, $ill_w$ are calculated as follows:

$$gm_w = (gm_{max} - gm_{min})/K \tag{9}$$

$$ill_w = (ill_{max} - ill_{min})/M$$

In this example, the minimum acceptable gm and ill bin intervals was set to 0.05, but it could be set to any other suitable value.

The near clipped pixels are subdivided into KxM groups based on the values of their T-space colour components, gm and ill. Regression coefficients $a_0$, $a_1$, $a_2$ are calculated for each group and saved in the corresponding cell $H_{ij}$ in the regression binning array. $H_{ij}$, refers to the $(i,j)^{th}$ element of the array, H, and i = 1,2,3... K, j = 1,2,3 ... M. The following pseudo code describes how the regression binning array, $H_{ij}$ is populated:

$$\text{for } i = 1 \text{ to } K$$

$$\text{for } j = 1 \text{ to } M$$

-Select the subset of near clipped pixels $Q_{ij}$ such that for any near clip pixel, its gm and ill value satisfy the condition:

$$(gm_i \leq gm < gm_{i+1}) \, \& \, (ill_j \leq ill < ill_{j+1}), \text{ where:}$$

$$gm_i = (i\text{-}1).gm_w + gm_{min}$$

$$ill_j = (j\text{-}1).ill_w + ill_{min}$$

-Calculate the regression coefficients from the subset of pixels $Q_{ij}$

-Store the coefficients in bin $H_{ij}$.

end

end

In other words, each of the near clipped pixels is categorised in terms of its gm and ill value. The regression coefficients $a_0$, $a_1$, $a_2$ are then calculated for each group of pixels and stored in a corresponding position in the two dimensional regression binning array 46.

Coefficients for unpopulated bins are computed from neighbouring cells either using a nearest neighbour interpolation or by using linear (or higher order) interpolation functions.

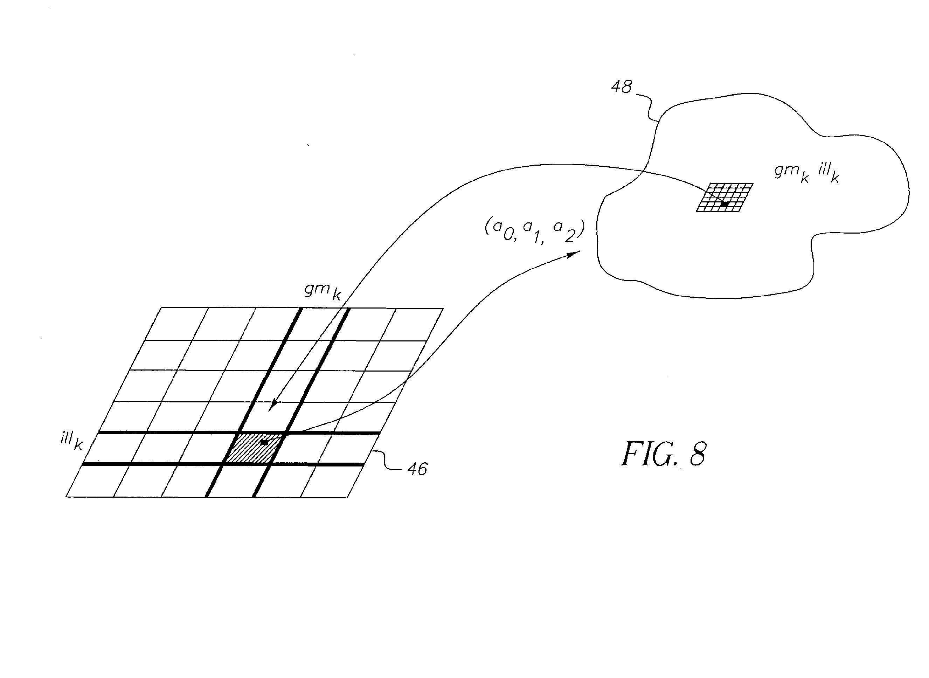

Once the regression binning array, H is populated it is possible to estimate a value for the clipped channel of a clipped pixel. Figure 8 shows a schematic representation of an estimation process used in the present invention. A clipped region 48 is to be estimated based on the two-dimensional regression binning array 46. Initially, the T-space colour components, gm and ill for the clipped pixel are calculated. Then values i and j are selected such that the condition:

$$(gm_i \leq gm < gm_{i+1}) \, \& \, (ill_j \leq ill < ill_{j+1}) \tag{10}$$

is satisfied for the clipped pixel.

If the clipped pixel falls outside the range covered by the regression binning space, then the populated cell that minimises the distance between the gm,ill value of the clipped pixel and the cell gm,ill coordinates is selected.

Once a cell $H_{ij}$ has been identified that most closely corresponds to the T-space colour components of the clipped pixel, the coefficients $a_0$, $a_1$, $a_2$ contained in that corresponding cell are selected and assigned to that pixel. A value for the estimated pixel can then be computed simply using the multivariate linear regression equation (1) with values for the coefficients $a_0$, $a_1$, $a_2$ obtained from the cell $H_{ij}$. In other words, a value for channel Z for the corresponding pixel is calculated by substitution of the values X and Y from that pixel together with the selected regression coefficients from the cell $H_{ij}$ into the equation (1). The estimation can be described as:

$$Z = A_0(gm,ill) + A_1(gm,ill).X + A_2(gm,ill).Y \tag{11}$$

where $A_0(gm,ill)$, $A_1(gm,ill)$ and $A_2(gm,ill)$ refer to the coefficients $a_0$, $a_1$ and $a_2$, respectively, that are stored in the regression binning array cell, $H_{ij}$. The cell coordinates, i and j, are the values that satisfy the condition described in equation (10) given gm and ill.

As with the case in which the difference of unclipped channels is used, it is possible to determine a set of regression coefficients $a_0$, $a_1$, $a_2$ using linear (or higher order) interpolation methods. Finally, the estimated value for the channel Z is constrained within predetermined limits. The size of the array is relatively small and therefore the memory requirements for a processor (described below) used to execute the steps of the method of the present invention are correspondingly small, which is desirable.

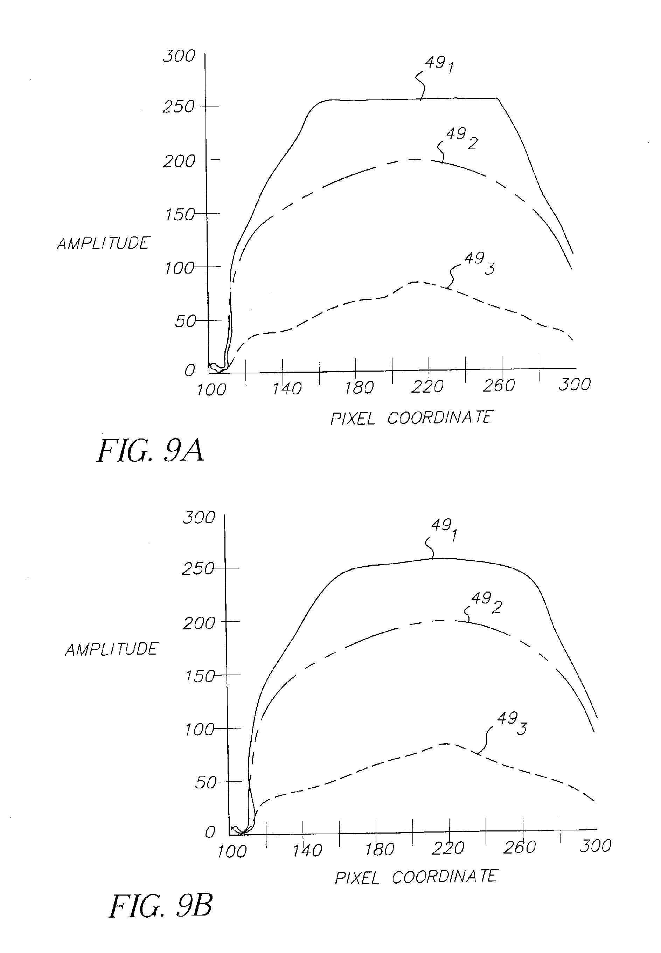

Figure 9A shows an example of a plot of variation of signal amplitude with respect to position across a region of an 8-bit per channel RGB image in which the red channel has clipped. There are three lines $49_1$, $49_2$ and $49_3$ each

corresponding to a respective one of the red signal level, green signal level and blue signal level. The red signal $49_1$ has clipped since its level extends beyond the maximum (255) as defined by the dynamic range of the imaging device used to capture the scene image. The green $49_2$ and blue $49_3$ signals have not clipped since their maximum amplitudes at all times across the region of the image remains substantially below the maximum possible amplitude of 255.

Figure 9B shows an example of a plot of variation of signal amplitude with respect to position in which the singly clipped red channel from Figure 9A, has been estimated in accordance with the method of the present invention. The profile of the red channel in Figure 9B is curved in the region corresponding to the clipped region in Figure 9A, which is flat. The image in this case has been shaped to constrain the estimated pixel to within the maximum available range. The unconstrained values for the estimated red channel may be stored as metadata for use with other image processing algorithms. The channels in Figure 9B have been tonescaled in that the shape of the red channel has been adjusted slightly immediately either side of the clipped region (approximately pixels 150 to 162 and 260 to 272). The same proportion of amplitude attenuation is applied to each channel.

As mentioned above, where one or more channels of an image signal are clipped, the true colour of the signal can be altered. In the case of an sRGB image, clipping in one channel will introduce an error equal to Z' - Z, where Z' is the original channel value before clipping and Z, the channel value after clipping. An error will therefore be introduced into the estimate of gm and ill for the clipped pixel and this will, in turn, affect the accuracy with which the regression coefficients are referenced from the two-dimensional regression binning array.

An estimate for the colour error, i.e. the error in the level of the clipped channel, introduced due to the clipping at each clipped pixel is made, so that a correction factor equal to the colour error estimate can be added to the computed channel value to take it to its original, unclipped value. If, for example, the error introduced into the computation of gm, ill was estimated to be equal to $gm_e$, $ill_e$ and a corresponding correction factor $gm_c$ ($=gm_e$) and $ill_c$ ($= ill_e$) was added to the computed values of gm and ill, an estimated value for the original colour of the clipped pixel would be obtained, as follows:

$$gm'_{est} = gm + gm_c$$

$$ill'_{est} = ill + ill_c$$

where $gm'_{est}$ and $ill'_{est}$ are the estimated original unclipped colours at the clipped pixel.

To obtain an estimate of the colour error introduced in the clipped pixel it is assumed that the colour distribution of the near clipped pixels is equivalent to the colour distribution of pixels over the clipped region. This should be the case provided that the selection of near clipped pixels is an accurate and representative sample of pixel data from the object or shape in which the clipped region exists.

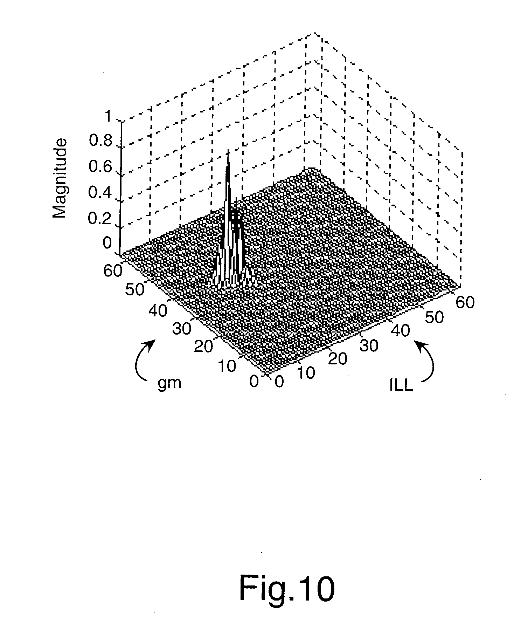

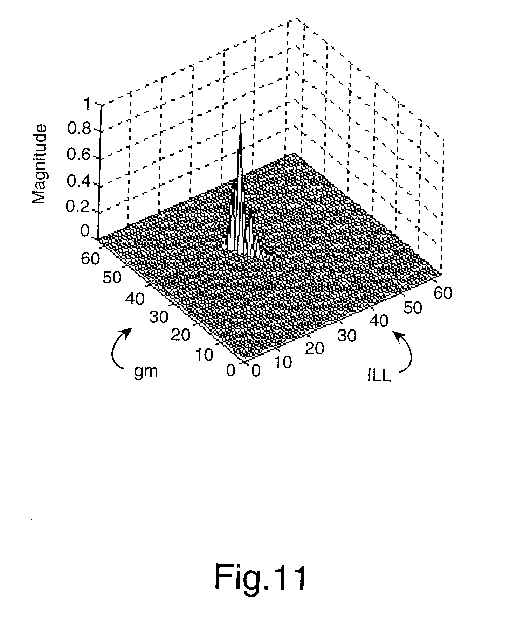

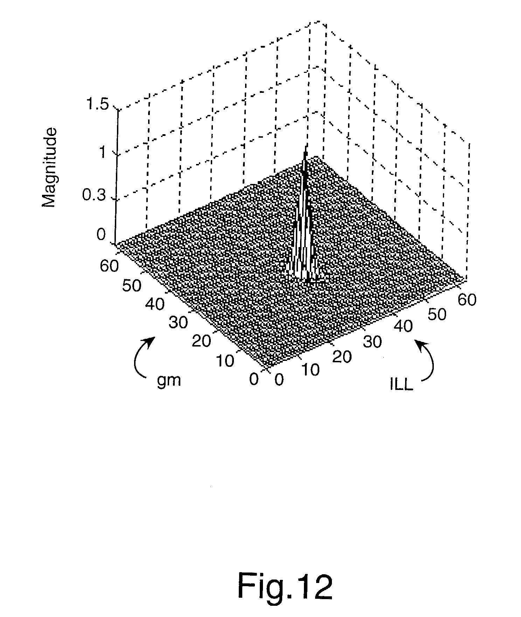

Figure 10 shows an example of a gm, ill histogram for a region of near clipped pixels in a digital image. Figure 11 shows the corresponding gm, ill histogram for the region of clipped pixels in the digital image. Figure 12 shows the cross correlation of the histograms of Figures 10 and 11.

Assume that the 2-dimensional gm, ill histogram of the clipped and near clipped pixels is given by $S_c$ and $S_{nc}$ respectively. If the cross-correlation of $S_c$ and $S_{nc}$ is taken, then the location of the peak in the correlation space gives the mean correction in gm and ill that is required to compensate for errors in the computation of gm and ill over the clipped region.

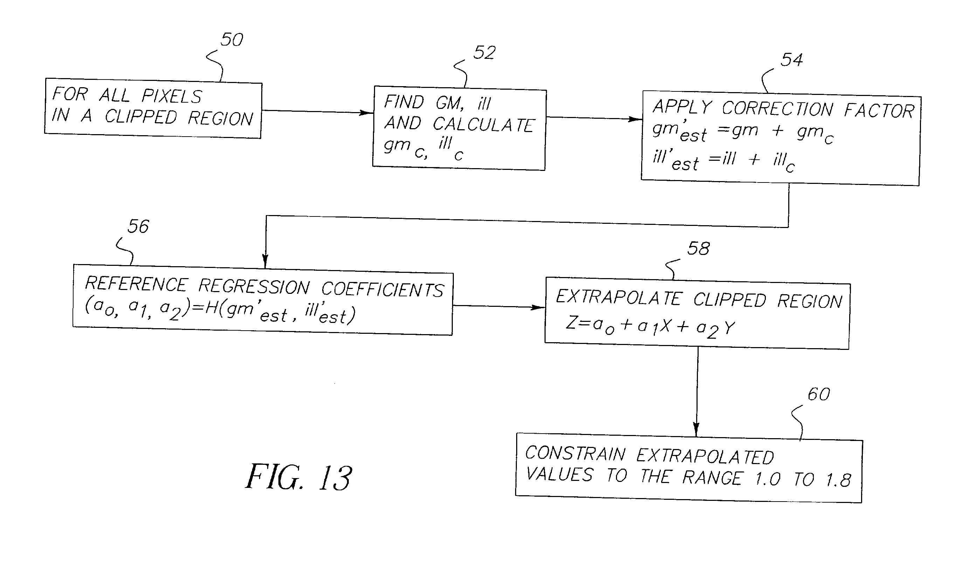

Figure 13 is a flow diagram showing the steps in an error correction method used to correct error in the regression coefficients stored in the array $H_{ij}$ once the array has been populated. At step 52, gm and ill are determined for a pixel in the clipped region and an estimate for a corresponding value for $gm_c$ and $ill_c$ is made in accordance with the cross-correlative method described above. At step 54, the correction factors $gm_c$ and $ill_c$ are added to the values of gm and ill determined for the pixel in the clipped region to provide corrected values $gm'_{est}$ and $ill'_{est}$. In step 56, the values of $gm'_{est}$ and $ill'_{est}$ are then used to obtain values for the regression coefficients $a_0$, $a_1$, $a_2$ from the corresponding cell $H_{ij}$. A value for the clipped pixel can then be estimated using the values of the regression coefficients $a_0$, $a_1$, $a_2$ that correspond to the corrected values ($gm'_{est}$, $ill'_{est}$) for gm and ill.

As above, once the right set of regression coefficients has been identified a value for channel Z for the corresponding pixel is calculated by substitution of the values X and Y from that pixel together with the selected regression coefficients from the cell $H_{ij}$ into equation (1). This is described by equation (11) where gm and ill are substituted by $gm'_{est}$ and $ill'_{est}$ respectively. Finally, at step 60, the value for the clipped pixel is constrained to within predetermined limits.

A problem with computing a single gm and ill colour correction factor $gm_c$ and $ill_c$ is that the amount of clipping which occurs over a clipped region can vary significantly. This can mean that the correction factor computed over a clipped region is accurate for only a small portion of pixels from that region. A more accurate estimate of the correction factor can be obtained if the clipped pixels were grouped into sub-regions as a function of some parameter e.g. their neutral (neu) value.

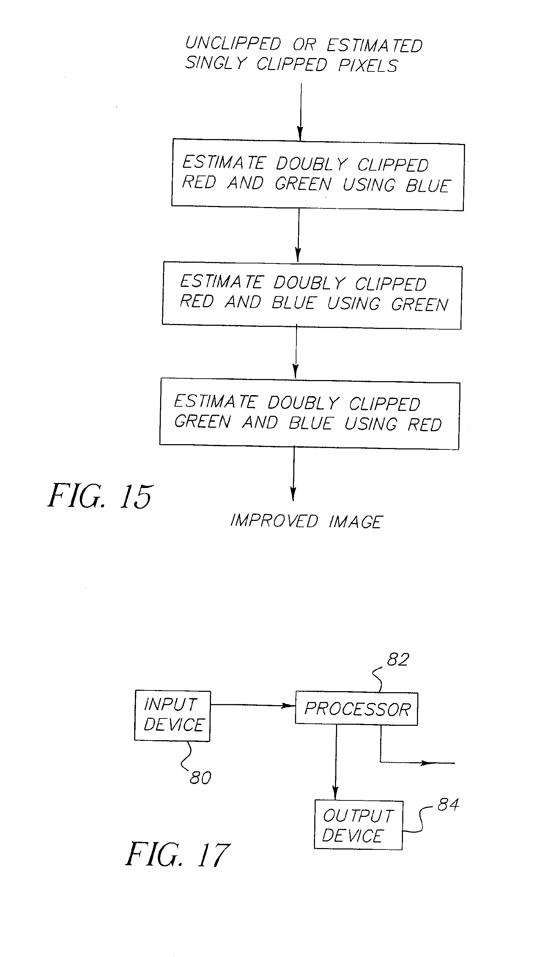

Figure 14 shows a schematic representation of a clipped region of a digital image which has been divided into a plurality of sub-regions. In this example, the clipped pixels are divided into P sub-regions containing an approximately equal number of pixels. Typically, P may be equal to 10 or less. This is achieved by setting the sub-region boundaries equal to the neutral value that corresponds to the $n^{th}$ percentile of the pixel neutral values taken over the clipped region, where n=10, 20, 30, .... 90. A gm,ill histogram is formed from pixels contained in each sub-region and this is cross-correlated with the gm,ill histogram of the near clipped pixels as explained above with reference to Figures 10 to 12.

In each case, the correlation peak corresponds to the gm,ill displacement needed to correct for gm,ill errors in the sub-region. Initially, the minimum ($neu_{min}$) and maximum ($neu_{max}$) neutral values in the clipped region are found. Next, the 10th, 20th, 30th ... 90th percentiles of the neutral component values taken over the entire clip region are determined. If adjacent percentile values are equal (i.e. any particular sub-region contains no pixels) adjacent sub-regions, are merged together.

Next a gm,ill histogram of the near clip data is computed. Then for each of the P sub-regions, a gm,ill histogram is computed and this is cross-correlated with the gm,ill histogram of the near clipped pixels. The histogram peak is found for each sub-region i, for i = 1 to P, which provides $(gm_c, ill_c)_i$ for i = 1 to P. The result is a table of $gm_c, ill_c$ entries as a function of neutral percentile value. A gm,ill correction for each clipped pixel can be interpolated from this table given the computed neutral value of the clipped pixel.

During the course of estimating singly clipped regions some regions may not be successfully estimated due to the following reasons: (i)The total number of clipped pixels for a given channel was less than a predetermined number of pixels, say 0.02% of the total number of pixels. (ii) The clipped pixel formed part of a connected clipped region that contained fewer than a predetermined number of pixels, say 0.02% of the total number of pixels (iii) The number of near-singly clipped pixels is less than a predetermined threshold, say 10. In this case the accuracy of the regression coefficients is likely to be low and the singly clipped region is not estimated. A list of red channel, blue channel and green channel clipped pixels that were not successfully estimated is saved. The unestimated pixels can be filled (blended with the surrounding region) using a pixel-fill method described below.

The process described above for estimating pixel values in a singly clipped region is repeated for each of the singly clipped regions of red, green and blue pixels. Once this is complete, doubly clipped pixels are estimated.

Figure 15 shows a schematic flow diagram of the steps in estimating doubly clipped pixels according to the method of the present invention. Doubly clipped pixels are estimated after all singly clipped pixels for each of the image channels have been estimated. If no singly clipped pixels exist in the image, estimation of values for the clipped channels of doubly clipped pixels commences. With doubly clipped pixels, two of the channels are clipped and the third is unclipped. Hence in Figure 15 at step 62, the unclipped or estimated singly clipped pixels are input to the method of estimating values for the clipped channels of doubly clipped pixels. At step 64, values for clipped red and green channels are estimated using the unclipped blue channel. At step 66, values for clipped red and blue channels are estimated using the unclipped green channel. At step 68, values for clipped green and blue channels are estimated using the unclipped red channel. Finally, the output is further processed to deal with any triply clipped pixels as will be explained below.

In the present example, doubly clipped pixels are estimated so that the hue and saturation of the clipped pixels is modified to blend it with the hue and saturation of the surrounding near doubly-clipped pixels. The estimated singly clipped image data (i.e. reconstructed singly clipped pixels) are processed in linear space by the doubly clipped estimation algorithm.

A region comprising near doubly-clipped pixels is needed in order to estimate values for the clipped channels of doubly clipped pixels. The region is generated in a similar manner to that in which the near singly clipped region A was obtained as described above with reference to Figure 4. A binary image corresponding to the doubly clipped region is generated. The region is dilated. The original undilated image is subtracted from the dilated image. All pixels in the resulting region, which are classified as triply clipped, are excluded from the processing. In addition, any pixels in the resulting region, which are less than or equal to a distance of L pixels from the image border, are excluded from the region. L may be equal to 10 or any other suitably selected number.

Doubly (highlight) clipped green and red pixels i.e. pixels in which the green and red channels are both highlight clipped, are selected from the image as those that satisfy the following condition:

$$(R \geq (R_{h,cl} - N_c)) \ \& \ (G \geq (G_{h,cl} - N_c)) \ \& \ (B < (B_{h,cl} - N_c)) \tag{12}$$

in which R,G and B are the values of the non-linear sRGB channels, and $R_{h,cl}$, $G_{h,cl}$ and $B_{h,cl}$ are the values at which the red, green and blue channels clip. As above, $N_c$ is set equal to 3 for sRGB images.

As in the estimation of values for the clipped channel of singly clipped pixels, if the total number of doubly clipped pixels is less than or equal to 0.02% of the total number of pixels in the image, these may be ignored at this stage. Regions of doubly clipped pixels are formed from connected clipped pixels and clip regions containing fewer than 0.02% of the total number of pixels in the image may be ignored as explained above.

A near doubly-clipped region is generated as explained above and pixels in the near doubly clipped region are converted to T-space using equations (8). A 2-dimensional gm,ill histogram is formed from the near doubly-clipped pixels and, in one example, the mode values of gm and ill, $gm_{mode}$ and $ill_{mode}$ are selected. This corresponds to the most frequently occurring colour in the near doubly clipped region. Generally, values $gm_{sel}$, $ill_{sel}$ of gm and ill are selected as those that correspond most closely to the correct representation of the T-space value of the colour of the near clipped region.

Estimated values for the red and green channels of the doubly clipped pixels are then calculated from the following transform:

$$r_{est} = b - \sqrt{2}.ill_{mode} \qquad (13)$$

$$g_{est} = (\sqrt{6}/2)\, gm_{mode} - (1/\sqrt{2})\, ill_{mode} + b$$

where b is the logarithm of the linear unclipped blue channel, and $r_{est}$ and $g_{est}$ are the estimated red and green channels. $r_{est}$ and $g_{est}$ are logarithms of the linear space image data.

Finally, the linear values $R_{est}$ and $G_{est}$ (derived from $r_{est}$ and $g_{est}$) are constrained to a predetermined range such as (for the estimated highlight doubly clipped pixels) $1.0 \le R_{est}, G_{est} \le 1.8$ in the case where the value at which the red and green channels clip is 1.0. The transform equations (13) used to determine estimated values $r_{est}$ and $g_{est}$, correspond to simultaneous solution for r and g, given gm, ill and b of the T-space transform equations (8).

Once the doubly clipped red/green pixels have been estimated, the doubly clipped red and blue pixels may be estimated using the unclipped green channel. In this case, the required input comprises the doubly estimated red channel (i.e. the red channel from the estimated doubly clipped red/green pixels) and the singly estimated green and blue channels. The output comprises estimated red and blue channels that were previously doubly clipped in red and blue.

To estimate highlight doubly clipped red/blue pixels, all pixels that satisfy the condition:

$$(R \ge (R_{h,cl} - N_c))\ \&\ (G < (G_{h,cl} - N_c))\ \&\ (B \ge (B_{h,cl} - N_c)) \qquad (14)$$

are selected from the original image.

$N_c$ is typically equal to 3 for sRGB images. Again, regions smaller than a predetermined size e.g. up to 0.02% of the total number of pixels in the image, may be ignored.

For each clipped region a near doubly-clipped region is generated and this is converted to T-space. A 2-dimensional gm,ill histogram is formed from the near doubly-clipped pixels and as above, the mode values, $gm_{mode}$ and $ill_{mode}$ are selected from the histogram. This corresponds to the most frequently occurring colour in the near doubly clipped region.

Newly estimated values for red and blue channels are calculated from the following transform:

$$r_{est} = g - (1/\sqrt{2}).ill_{mode} - (\sqrt{6}/2).gm_{mode} \qquad (15)$$

$$b_{est} = (1/\sqrt{2}).ill_{mode} - (\sqrt{6}/2).gm_{mode} + g$$

where g is the logarithm of the linear green channel, and $r_{est}$ and $b_{est}$ are the estimated red and blue channels. $r_{est}$ and $b_{est}$ are logarithms of the linear space image data.

Finally, the linear values $R_{est}$ and $B_{est}$ (derived from $r_{est}$ and $b_{est}$) are constrained to a predetermined range such as (for the estimated highlight doubly clipped pixels) $1.0 \le R_{est}, B_{est} \le 1.8$ in the case where the pixels clip at 1.0.

Next, doubly clipped green /blue pixels are estimated. To estimate the doubly clipped green /blue pixels the doubly estimated green and doubly estimated blue channels are used. In addition, the estimated singly clipped red channel from the image is required. As will be explained below, these inputs enable estimation of green and blue channels in pixels that were previously doubly clipped in green and blue.

To estimate doubly highlight clipped green/blue pixels, all pixels that satisfy the condition:

$$(R < (R_{h,cl} - N_c)) \ \& \ (G \geq (G_{h,cl} - N_c)) \ \& \ (B \geq (B_{h,cl} - N_c)) \tag{16}$$

are selected from the original image.

$N_c$ is typically equal to 3 for sRGB images. Again, regions smaller than a predetermined size e.g. up to 0.02% of the total number of pixels in the image, may be ignored.

For each clipped region a near doubly-clipped region is generated and this is converted to T-space. A 2-dimensional gm,ill histogram is formed from the near doubly-clipped pixels and the mode, $gm_{mode}$ and $ill_{mode}$ is selected from the histogram. This corresponds to the most frequently occurring colour in the near doubly clipped region.

Newly estimated green and blue channels are calculated from the following transform:

$$g_{est} = (1/\sqrt{2}).ill_{mode} + (\sqrt{6}/2).gm_{mode} + r \tag{17}$$

$$b_{est} = (\sqrt{2}).ill_{mode} + r$$

where r is the logarithm of the linear unclipped red channel, and $g_{est}$ and $b_{est}$ are the estimated green and blue channels. $g_{est}$ and $b_{est}$ are logarithms of the linear space image data.

Finally, the linear values $G_{est}$ and $B_{est}$ (derived from $g_{est}$ and $b_{est}$) are constrained to a predetermined range such as $1.0 \leq G_{est}, B_{est} \leq 1.8$ in the case where the green and blue channels clip at 1.0. The transform equations (17) used, correspond to simultaneous solution of the T-space transform equations (8) for g and b, given gm, ill and r.

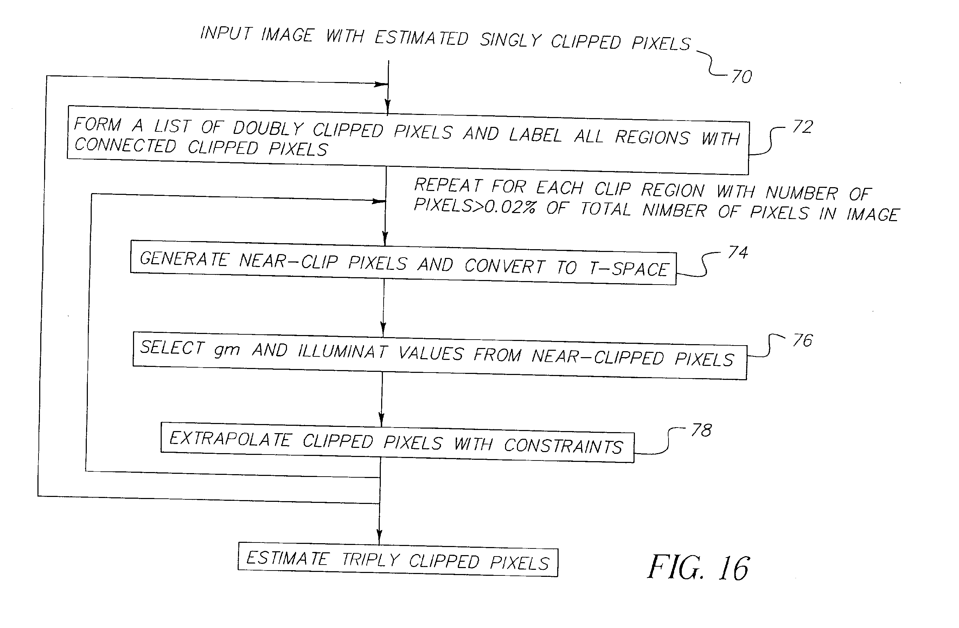

Figure 16 shows a schematic flow diagram of a summary of the steps in estimating doubly clipped pixels within an image according to the method of the present invention. The input to the method at step 70 is the digital image in which any singly clipped pixels have already been estimated. There are three possible types of doubly clipped pixels: red/green, red/blue and green/blue and in this example values of the clipped channels for each type must be estimated in sequence. Initially at step 72, a list of doubly clipped pixels is formed and connected regions identified. Starting with one type of doubly clipped pixels, at step 74 near clip pixels are selected and converted to T-space.

Then at step 76, the gm and ill mode values are selected from a 2-dimensional gm, ill histogram of the near clip pixels. At step 78, using the values of $gm_{mode}$ and $ill_{mode}$ together with a linear (or higher order) regression, the values for the doubly clipped pixels are calculated and constrained to within predetermined limits. This process is cycled through for each of the three types of doubly clipped pixels until they have all been estimated.

During the course of estimating doubly clipped regions some regions may not be successfully estimated due to the following reasons: (i)The total number of clipped pixels for a given channel was less than a predetermined number of pixels, say 0.02% of the total number of pixels. (ii) The clipped pixel formed part of a connected clipped region that contained fewer than a predetermined number of pixels, say 0.02% of the total number of pixels (iii) The number of near-singly clipped pixels is less than a predetermined threshold, say 10. A list of red channel, blue channel and green channel clipped pixels that were not successfully estimated is saved. The unestimated pixels can be filled (blended with the surrounding region) using a pixel-fill method described below.

Once all the doubly clipped pixels have been estimated, the triply clipped pixels are then estimated.

When all three channels are clipped no useful information can be determined from the clipped pixel with regards to its original value before it was clipped. One possible method used to estimate triply clipped pixels is to blend the triply clipped pixels in with the surrounding near clipped pixels. The value assigned to each of the channels of a triply clipped pixel can exceed the respective channel's clip value e.g. 1.0, but is limited to a maximum value e.g. 1.8.

To estimate triply highlight clipped pixels, initially all pixels in the original sRGB image which satisfy the condition:

$$(R \geq (R_{h,cl} - N_c)) \ \& \ (G \geq (G_{h,cl} - N_c)) \ \& \ (B \geq (B_{h,cl} - N_c)) \tag{18}$$

are selected and regions of connected pixels identified.

$N_c$ is typically equal to 3 for sRGB images.

Again, regions smaller than a predetermined size e.g. up to 0.02% of the total number of pixels in the image

may be ignored. For each region of triply clipped pixels, a region of near triply clipped pixels is generated. A method for generating the near triply clipped region similar to that used for generating the near clipped regions for doubly clipped pixels may be used. Additionally, the following rules are applied to constrain the set of pixels contained in the near triply-clipped region: (i) The pixel contained in the near clipped region must not be a member of the unestimated set of doubly or singly clipped pixels. (ii) The pixel contained in the near clipped region must be a singly or doubly clipped pixel that was successfully estimated by the singly or doubly clipped estimation method, respectively, described above.

An RGB histogram of the set of pixels (in linear RGB space) contained in the near triply-clipped region is formed and a value for each of R, G and B is selected that is representative of the RGB values of the near triply clipped pixels. Typically, these values are the mode values of the histogram, $R_{mode}$, $G_{mode}$, $B_{mode}$. All pixels in the triply clipped region are then set to the selected value e.g. $R_{mode}$, $G_{mode}$, $B_{mode}$.

In an alternative implementation, a histogram containing M bins is formed for the red channel of the set of pixels (in linear space) contained in the near triply-clipped region is formed. The pixel channel value, $R_M$, that corresponds to the mode of the histogram is found. Typically M = 256 for sRGB images. Then a further 4 histograms containing M/2, M/4. M/8 and M/16 bins respectively are formed from the red channel of the same set of pixels contained in the near triply-clipped region. The pixel channel values, $R_{M2}$, $R_{M4}$, $R_{M8}$ and $R_{M16}$, that correspond to the modes of the four histograms, respectively, are found. The maximum, $R_{max}$, of $R_{M2}$, $R_{M4}$, $R_{M8}$ and $R_{M16}$ is selected. The above procedure is repeated for the green and blue channels and the maximum pixel channel values, $R_{max}$, $G_{max}$ and $B_{max}$ are determined. All the pixels in the triply clipped region are then set to the value $R_{max}$, $G_{max}$ and $B_{max}$.

A problem sometimes encountered when estimating the channel values for pixels in some triply clipped regions is that the mode of the R,G,B values of a near triply clipped region is not well defined. For example, the values of the near clipped pixels can vary widely over the extent of the triply clipped region and this can result in a histogram that contains multiple peaks that are close, in magnitude, to the mode. More accurate blending of the triply clipped pixels with the surrounding neighbourhood pixels can be achieved if a surface is derived from the near triply clipped region (or part of the region) using least squares, and then applied to the triply clipped region. A linear surface may be suitable, although higher order surfaces can also be used.

During the course of estimating triply clipped regions some regions may not be successfully estimated due to the following reasons: (i)The total number of clipped pixels for a given channel was less than a predetermined number of pixels, say 0.02% of the total number of pixels. (ii) The clipped pixel formed part of a connected clipped region that contained fewer than a predetermined number of pixels, say 0.02% of the total number of pixels. A list of triply clipped pixels that were not successfully estimated is saved.

In many cases pixels in small singly, doubly and triply clipped regions may not have been successfully estimated for the reasons described above e.g. the number of clipped pixels for a given channel in the region was less than a predetermined number of pixels, say 0.02% of the total number of pixels in the image. The unestimated pixels can be corrected so that regions of unestimated clipped pixels are less visible to an observer because values of the unestimated pixel channels have been selected such that they are consistent with the surrounding region. One suitable method for correcting pixels in such regions is described in detail in United States Patent number 6,104,839, invented by Cok, Gray and Matraszek and assigned to Eastman Kodak Company, entitled "Method and apparatus for correcting pixel values in a digital image". This patent describes a method and apparatus for correcting long and narrow regions of defect pixels in a digitised image. The defect pixels are reconstructed such that they are visually consistent with the non-defect pixels in the image.

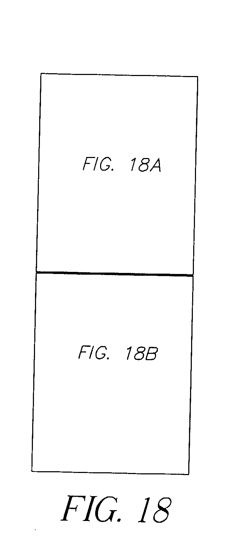

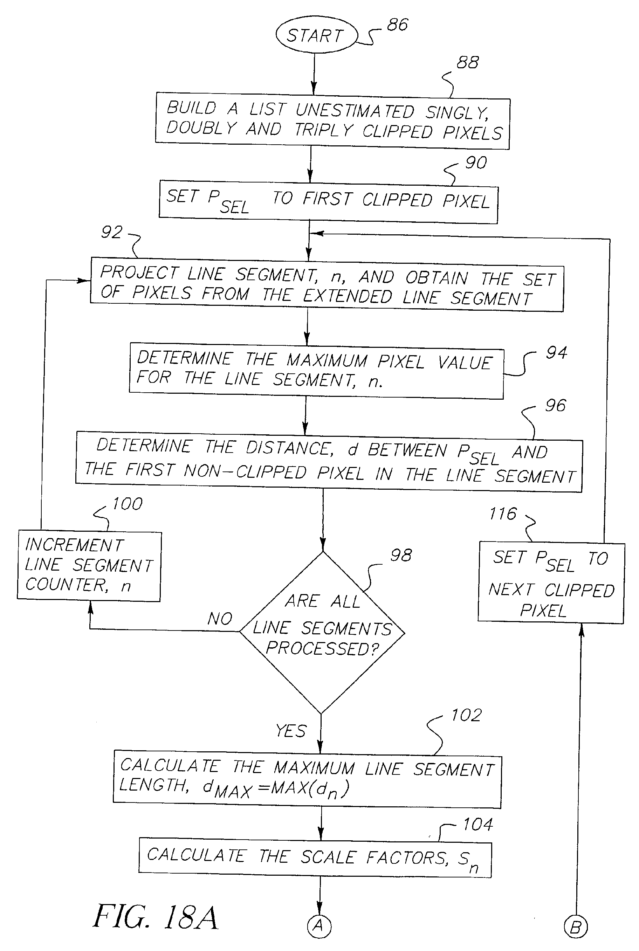

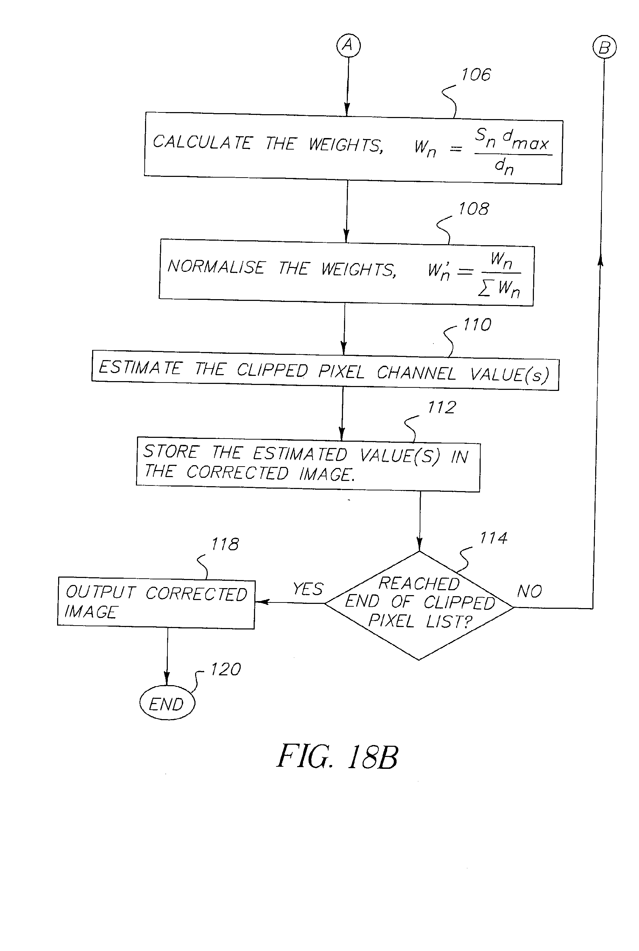

In the present invention, a pixel-correction algorithm similar to that described in US 6104839 is used to fill unestimated pixels in singly clipped, doubly clipped and triply clipped regions. Consider a three channel image where the channels X,Y and Z correspond to any order of R, G or B. Figure 18 is a flow diagram showing the steps in the pixel-correction algorithm used in the present invention. Referring to figure 18 the procedure for correcting (filling) the unestimated clipped pixels starts at step 86. A list of the unestimated singly, doubly and triply clipped highlight pixels is constructed . Next the first clipped pixel in the list is selected, $P_{SEL}$, at step 90. A set of lines that project from the selected pixel are defined. The radial angular difference between each line is equal and typically set at 22.5 degrees or 45 degrees. A total of N lines are defined where n refers to each line segment (n=1 ... N). At step 92 a straight line is projected from $P_{SEL}$ in the direction specified by the line segment angle associated with line segment n=1. The line is projected until either (i) a non-clipped pixel is reached, or (ii) the line intersects with the image border, or (iii) the number of pixels in the line exceeds $L_s$. Typically, $L_s$ is set to 200. If condition (ii) or (iii) is satisfied (i.e. a non-clipped pixel is not reached) then continue to step 98. If a non-clipped pixel has been reached then further extend the line segment by $L_{ext}$ pixels in the same direction and obtain the image pixel values, $z_{n,j}$, $x_{n,j}$, $y_{n,j}$, that intersect the extended line segment, where $j=1,...,L_{ext}$ and n refers to the line segment. Typically, $L_{ext}$ is set to 5.

If the extended line segment intersects a clipped pixel, then ignore any further pixels in that line segment. In step 94 the maximum value of each channel in the extended line segment values, $z_{n,j}$, $x_{n,j}$, $y_{n,j}$, is found. The maximum is given by $Z_{n,max}$, $X_{n,max}$ and $Y_{n,max}$. The Euclidean distance, $d_n$, between the first non-clipped pixel and $P_{SEL}$ for the line segment, n, is determined in step 96. If unprocessed line segments remain at step 98 (i.e. n < N) then proceed to step 100 and increment the line step counter. The next line segment is processed as described above (steps 92 through 98 inclusive). When all the line segments have been processed the maximum line segment length, $d_{max}$, is calculated from $d_n$. A scale factor, $S_n$, is calculated for each line segment, n, in step 104. If unestimated singly clipped highlight pixels are being corrected then assuming that Z corresponds to the channel that was clipped, set $S_n = 0.5$ if $Z_{n,max} < Z_{h,cl}$, otherwise set $S_n = 1.0$. If unestimated doubly clipped highlight pixels are being corrected then assuming that Z and X correspond to the channels that were clipped, then set $S_n=0.5$ if $Z_{n,max} < Z_{h,cl}$ and $X_{n,max} < X_{h,cl}$. Otherwise set $S_n = 1.0$. If unestimated triply clipped highlight pixels are being corrected then set $S_n = 0.5$ if $Z_{n,max}<Z_{h,cl}$, $X_{n,max}<X_{h,cl}$ and $Y_{n,max}<Y_{h,cl}$. Otherwise set $S_n=1.0$. A weight is calculated for each line segment in step 106 as follows:

$$W_n = \frac{S_n.d_{max}}{d_n}$$

where:

$W_n$ = weight for line segment n.
$S_n$ = scale factor for line segment n.
$d_{max}$ = the maximum Euclidean distance between $P_{SEL}$ and the first non-clipped pixel taken over all the line segments evaluated at pixel $P_{SEL}$.
$d_n$ = the Euclidean distance between $P_{SEL}$ and the first non-clipped pixel for line segment n.

The weights are normalised in step 108 by dividing each weight by the sum of the weights taken over all the line segments for pixel $P_{SEL}$. The normalised weights are referred to as W'. The clipped channel pixel value, or values, are estimated in step 110 as follows. If an unestimated singly clipped pixel is being corrected then the clipped channel value is set in the corrected image to Z', where:

$$Z^{'} = \sum_{n=1}^{N} W_n^{'}.Z_{n,max}$$

The values for X and Y are unchanged. If an unestimated doubly clipped pixel is being corrected then the clipped channel values are set in the corrected image to Z' and X' as follows:

$$Z^{'} = \sum_{n=1}^{N} W_n^{'}.Z_{n,max}$$

$$X^{'} = \sum_{n=1}^{N} W_n^{'}.X_{n,max}$$

The value for Y in the corrected image is unchanged. If an unestimated triply clipped pixel is being corrected then the clipped channel values are set in the corrected image to Z', X' and Y' as follows:

$$Z^{'} = \sum_{n=1}^{N} W_n^{'}.Z_{n,max}$$

$$X^{'} = \sum_{n=1}^{N} W_n^{'}.X_{n,max}$$

$$Y' = \sum_{n=1}^{N} W_n' . Y_{n,\max}$$

If the corrected clipped channel value calculated above is less than the clip value for the respective channel (for highlight clipped pixels), then the clipped pixel value is left unmodified. The estimated value, or values, for the clipped channel, or channels, is stored in the corrected image in step 112 and $P_{SEL}$ is set to the next clipped pixel in step 116. The procedure for determining a corrected value for the unestimated clipped pixel is repeated (steps 92 to 114 inclusive) until all the unestimated clipped pixels have been processed. Then corrected image is output in step 118 and the process of correcting unestimated clipped pixels is complete (step 120).

Pixels that are singly, doubly or triply clipped in the shadow regions of the image, are estimated independently of highlight clipped pixels. The order in which highlight and shadow clipped pixels are estimated is unimportant, although singly clipped highlight and shadow clipped pixels must be estimated before doubly clipped highlight and shadow pixels. Triply clipped highlight and shadow pixels should be estimated last. The method for estimating shadow clipped pixels follows by analogy from the method for estimating highlight clipped pixels. There are differences between the two cases in the conditional expressions used to classify a clipped pixel and in the selection of near-clipped pixels. These are described below.

For the case of singly clipped shadow pixels, a pixel is classified as clipped in the Z channel, where Z is any of R, G or B, if it satisfies the following constraint:

$$(Z \leq (Z_{s,cl} + N_c)) \, \& \, (X > (X_{s,cl} + N_c)) \, \& \, (Y > (Y_{s,cl} + N_c)) \tag{19}$$

$Z_{s,cl}$, $X_{s,cl}$, and $Y_{s,cl}$ are the limit of the range of possible values of Z, X and Y respectively, at which shadow clipping occurs. $R_{s,cl}$, $G_{s,cl}$, and $B_{s,cl}$ are the limit of the range of possible values of the red, green and blue channels, at which shadow clipping occurs.

Equation (2) can be substituted by equation (19) when classifying singly clipped shadow pixels. The near-clip pixel region for singly clipped shadow pixels is described as the subset of pixels from near clipped region A that matches the following criterion:

$$(Z_{s,cl} + N_d) \geq Z > (Z_{s,cl} + N_c) \, \& \, (Y_{mode} + 0.75 \, N_d) \geq Y \geq (Y_{mode} - 0.25 \, N_d) \, \&$$

$$(X_{mode} + 0.75 \, N_d) \geq X \geq (X_{mode} - 0.25 \, N_d) \tag{20}$$

Equation (3) can be substituted by equation (20) when estimating pixel regions that are near singly clipped shadow pixels. For the case of doubly clipped shadow pixels, the doubly green and red clipped pixels are selected from the image as those that satisfy the following condition:

$$(R \leq (R_{s,cl} + N_c)) \, \& \, (G \leq (G_{s,cl} + N_c)) \, \& \, (B > (B_{s,cl} + N_c)) \tag{21}$$

Equation (12) can be substituted by equation (21) when estimating doubly clipped green and red shadow pixels. Doubly clipped red and blue pixels are defined as all the pixels that satisfy the condition:

$$(R \leq (R_{s,cl} + N_c)) \, \& \, (G > (G_{s,cl} + N_c)) \, \& \, (B \leq (B_{s,cl} + N_c)) \tag{22}$$

Equation (14) can be substituted by equation (22) when estimating doubly clipped red and blue shadow pixels. Doubly clipped green and blue pixels are defined as all the pixels that satisfy the condition:

$$(R > (R_{s,cl} + N_c)) \, \& \, (G \leq (G_{s,cl} + N_c)) \, \& \, (B \leq (B_{s,cl} + N_c)) \tag{23}$$

Equation (16) can be substituted by equation (23) when estimating doubly clipped green and blue shadow pixels.

Pixels are classified as triply clipped shadow pixels if they satisfy the condition:

$$(R \leq (R_{s,cl} + N_c)) \ \& \ (G \leq (G_{s,cl} + N_c)) \ \& \ (B \leq (B_{s,cl} + N_c)) \tag{24}$$

Equation (18) can be substituted by equation (24) when estimating triply clipped pixels.

Finally, the estimated highlight and/or shadow information relating to pixels that have been clipped, is reshaped in a linear image space to lie in the range 0 to 1.0. The estimated image in linear RGB space is shaped by a neutral tonescale function so that all the pixel data lies in the range 0 to 1.0. Any suitable shaping algorithm or process may be used. One example is the adaptive shoulder shaper piecewise function used by the viewing adaptation model as disclosed in UK patent application number 0120489.0, the contents of which are incorporated herein by reference. Shaping of highlight detail is accomplished using an adaptive shoulder shaper model, whereas shadow detail is reshaped using an adaptive toe shaper model. The sRGB tonescale is applied to the linear data to modify it so that it is suitable for viewing on a monitor. The processed image can be transformed to any desired colour space provided the appropriate colour space transforms and non-linearity functions are used.

In most cases, the value of the estimated pixels before the tonescale has been shaped will be outside the range of the display device on which the image is to be displayed, hence the reason why clipping occurred in the first place. The difference between the estimated pixel data (that exceeds 1.0 in the case of highlight clipping and in the case of shadow clipping that is less than 0) and the original pixel data can be saved as Metadata with the image for use by other image processing algorithms. For example, the performance of algorithms that alter the neutral tonescale or colour balance of an image can be impaired if clipped pixels exist in the image. Such algorithms can make intelligent use of this Metadata to improve the overall quality of images they generate.

The invention relates to the use of near clipped pixels in the estimation of lost data from clipped pixels in a digital image. The description above relates to examples of algorithms that may be used in the estimation of singly clipped, doubly clipped and triply clipped pixels. Other possible algorithms may also be used. For example, the coefficients $a_0$, $a_1$ and $a_2$ used in the regression described above used to estimate values for clipped channels may be obtained using an adaptation of a Hough transform for line recognition. Higher order regressions may also be used.

Figure 17 is a block diagram showing an example of an image processing system according to the present invention. The system is adapted to receive an input of a digital image to be processed and then process the received image in accordance with the method of the present invention described above. The system comprises an input device 80 to obtain information relating to the digital image to be processed. The input device 80 is coupled to a processor 82 adapted to execute the steps of the method of the present invention described above. In the example shown, the processor 82 is coupled to an output device 84 such as a printer to print a hardcopy output of the processed digital image. The output device may be a digital printer for printing the processed (improved) image on photographic material such as paper or slides, or a CD writer or any other form of device capable of producing an output from the system.

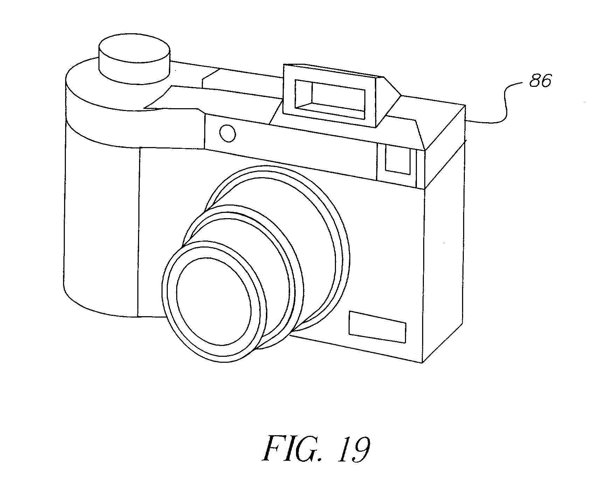

In one example, the system may be embodied in a digital camera 86 having digital image processing capacity, as shown schematically in Figure 19. The camera may comprise a digital still camera specifically designed for the capture of still images, or it may comprise a digital video camera capable of the capture and digitisation of motion sequences. The camera is adapted to capture a digital image of a scene or object being photographed and then process the captured scene according to the method of the present invention. In the case of a video camera, the capture device is adapted to process the captured scene on a frame-by-frame basis. The camera 86, includes a memory (not shown) to store the captured scene, the memory being arranged in communication with a processor such as a microprocessor for executing the steps of the method of the present invention. In an alternative embodiment, the memory, which may be integral to the camera or replaceable (such as a memory flash card), is adapted to provide a data stream comprising the digital image to a digital photofinishing system.

In a further example of the present invention, the system may be embodied by a digital photofinishing system. In this case, the input device 80 may comprise a digital negative scanner to scan negatives of processed film, a flat-bed scanner or alternatively it may comprise a digital reader for receiving an input directly from a digital source. Examples of digital sources include a smart card or a drive to receive a medium storing the digital image e.g. disc or CD-ROM. The source may be remote, such as an uploaded image from the internet or it may be the memory card from a user's digital camera. In any of these cases, a signal containing the digital image is provided by the input device 80 to the processor 82 associated with the digital photofinishing system. The processor may be programmed to process the received digital image in accordance with the method of the present invention. The clipping of the digital image may occur as the negatives are scanned by the input device 80 or it may be that the digital images captured by the user's digital camera are already clipped. Clipping may also occur in subsequent processing steps in the imaging chain i.e. the chain from the raw scan data to a rendered image for display on a monitor or for printing.

In one example, the processor is connected to a database of stored image processing algorithms and is adapted to receive a user input to select one or more of the stored image processing algorithms for use with the digital image. Again, once the image has been processed, it is output by the photofinishing system either in electronic or hard form.

The invention also comprises a computer program, optionally stored on a computer readable medium, comprising program code means for performing all the steps of the method of the present invention. Any suitable computer programming language may be used to code the computer program. Examples include C, C++, Matlab and Fortran. Optionally, the computer program may be provided hard-wired on an application specific integrated circuit.

**Claims**

1.  A method of image processing, comprising the step of:

    estimating a value for one or more clipped channels of one or more clipped pixels in a multi-channel image in dependence on information obtained from the unclipped channels of said one or more clipped pixels and from one or more unclipped pixels near to said one or more clipped pixels.

2.  A method according to claim 1, in which the clipped pixels are singly clipped in that only one of the channels of said clipped pixels is clipped.

3.  A method according to claim 2, comprising repeating said step of estimating a value for the clipped channel of the one or more singly clipped pixels in said multi-channel image in sequence for pixels with a different single clipped channel.

4.  A method according to claim 2, in which the multi-channel image is a digital image.

5.  A method according to claim 2, further comprising the step of identifying said one or more singly clipped pixels as pixels that satisfy one of the following conditions, for highlight clipping and shadow clipping respectively:

    $$(Z \geq (Z_{h,cl} - N_c)) \ \& \ (X \leq (X_{h,cl} - N_c)) \ \& \ (Y \leq (Y_{h,cl} - N_c));$$

    or

    $$(Z \leq (Z_{s,cl} + N_c)) \ \& \ (X \geq (X_{s,cl} + N_c)) \ \& \ (Y \geq (Y_{s,cl} + N_c))$$

    in which X, Y and Z are the values of the channels in each pixel;
    $Z_{h,cl}$, $X_{h,cl}$, and $Y_{h,cl}$ are the limit of the range of possible values of Z, X and Y respectively, at which highlight clipping occurs;
    $Z_{s,cl}$, $X_{s,cl}$, and $Y_{s,cl}$ are the limit of the range of possible values of Z, X and Y respectively, at which shadow clipping occurs; and,
    $N_c$ is a value used to define a clipped threshold.

6.  A method according to claim 2, in which the one or more unclipped pixels near to said one or more singly clipped pixels are identified in dependence on their distance from the one or more singly clipped pixels.

7.  A method according to claim 6, in which the one or more unclipped pixels near to said one or more singly clipped pixels are identified by expanding the area covered by said identified singly clipped pixels by a predetermined proportion and subtracting the area covered by said identified singly clipped pixels.

8.  A method according to claim 7, in which the step of identifying the one or more unclipped pixels adjacent to said one or more clipped pixels, further comprises, after the step of expanding the area covered by said identified clipped pixels by a predetermined proportion and subtracting the area covered by said identified clipped pixels, the step of excluding any pixels from the near clipped region that do not satisfy one or more predetermined requirements.

9.  A method according to claim 8, in which the one or more predetermined requirements include if the pixel is within a set number of pixels of a border within the image.

10. A method according to claim 8, in which the one or more predetermined requirements include if the value of one or more of the channels of the one or more pixels near to the singly clipped pixels is outside a predetermined range.

11. A method according to claim 7, in which the area covered by said identified clipped pixels is expanded by the action of a structuring element on a binary version of said image.

12. A method according to claim 2, in which the one or more singly clipped pixels are grouped together in regions and in which estimation of the value of the clipped channel of pixels in said regions is performed collectively for each region, each region being made up of either highlight or shadow singly clipped pixels.

13. A method according to claim 12, in which the regions are identified by a suitable connectivity algorithm such as an n-component connectivity algorithm in which n is 4 or 8.

14. A method according to claim 13, in which estimation is only performed if the region is larger than a predetermined threshold number of pixels.

15. A method according to claim 14, in which the threshold number of pixels is determined such that the region will be visible to the unaided eye of a viewer in a final output of the image.

16. A method according to claim 14, in which the threshold number of pixels is up to 0.02% of the total number of pixels in the image.

17. A method according to claim 14, in which if estimation is not performed a pixel correction method is activated to provide a corrected value for the clipped channel of said unestimated pixels.

18. A method according to claim 2, in which regression is used to determine a relationship between the clipped channel and the unclipped channels of the one or more singly clipped pixels.

19. A method according to claim 18, in which the relationship is used to determine an estimate for the value of the clipped channel of the one or more singly clipped pixels.

20. A method according to claim 19, in which the relationship is linear and is defined by the following equation:

$$Z = a_0 + a_1 X + a_2 Y$$

in which Z is the estimated value of the clipped channel;
X and Y are the values of the unclipped channels; and,
$a_0$, $a_1$ and $a_2$ are coefficients derived from the near-clipped pixels.

21. A method according to claim 20, in which the value for Z is constrained to within a predetermined range.

22. A method according to claim 20, in which the coefficients $a_0$, $a_1$ and $a_2$ are calculated using a least squares method in accordance with the following equations

$$\sum_{i=1}^{N} z_i = a_0 N + a_1 \sum_{i=1}^{N} x_i + a_2 \sum_{i=1}^{N} y_i$$

$$\sum_{i=1}^{N} z_i x_i = a_0 \sum_{i=1}^{N} x_i + a_1 \sum_{i=1}^{N} x_i^{2} + a_2 \sum_{i=1}^{N} x_i y_i$$

$$\sum_{i=1}^{N} z_i y_i = a_0 \sum_{i=1}^{N} y_i + a_1 \sum_{i=1}^{N} x_i y_i + a_2 \sum_{i=1}^{N} y_i^2$$

in which $x_i$, $y_i$ and $z_i$ are the channel levels in the set of N near singly clipped pixels.

**23.** A method according to claim 2, in which after a value has been estimated for one or more clipped channels in one or more clipped pixels, the tonescale of all pixels in said image is adjusted.

**24.** A method according to claim 23, in which the tonescale is adjusted using an adaptive shoulder shaper algorithm if the singly clipped pixels are highlight singly clipped and using an adaptive toe shaper algorithm if the singly clipped pixels are shadow singly clipped.

**25.** A method according to claim 2, in which when there is a variation in hue and/or saturation over a singly clipped pixel region, the method comprises the steps of:

transforming near singly clipped pixels into a transform space;
grouping the transformed near singly clipped pixels into areas defined by coordinates in the transform space;
calculating regression coefficients for each area and storing the regression coefficients in a binning array;
determining coordinates for the singly clipped pixels in the transform space;
estimating the clipped channel for each of the singly clipped pixels in the clipped region using the regression coefficients corresponding to coordinates of the singly clipped pixels in the transform space.

**26.** A method according to claim 25, in which the transform space is a delta space in which delta is defined as the difference between the two unclipped channels of the singly clipped pixels.

**27.** A method according to claim 25, in which the transform space is defined in terms of the ratio between the two unclipped channels of the singly clipped pixels.

**28.** A method according to claim 25, in which the transform space is a 3 dimensional colour space, the transform being defined as follows

$$neu = (r + g + b)/\sqrt{3}$$

$$gm = (2g - r - b)/\sqrt{6}$$

$$ill = (b - r)/\sqrt{2}$$

in which r, g and b are the logarithm of the red, green and blue linear intensities of the image pixels.

**29.** A method according to claim 28, in which the binning array is a 2 dimensional regression binning array defined in terms of gm and ill only, and in which a corresponding set of regression coefficients $a_0$, $a_1$ and $a_2$ is determined for each gm and ill coordinate in the transform colour space.

**30.** A method according to claim 29, in which an error signal is generated to account for error in the gm and/or ill coordinates introduced by the loss of data due to the clipped channel in the pixels of the clipped region.

**31.** A method according to claim 30, in which the error signal is generated by a cross correlation between gm,ill histograms of each of the clipped and near clipped pixel regions, the location of the peak in the corresponding correlation space providing the mean correction in each of the gm and/or ill coordinates.

**32.** A method according to claim 31, in which the clipped region is subdivided into regions in dependence on a selected parameter, and wherein a respective error signal is determined for pixels in each of the subdivided regions.

**33.** A method according to claim 32, in which the selected parameter is the neu value.

**34.** A method according to claim 32, in which the clipped region is subdivided into P regions, wherein P is between 2 and 10 inclusive, and wherein an error signal is generated for each subdivided region by a cross correlation between the gm,ill histograms of each of the subdivided clipped regions and the near clipped pixel region, the location of the peak in the corresponding correlation space providing the mean correction in each of the gm and/or ill coordinates for the pixels in each of the subdivided clipped regions.

**35.** A method according to claim 34, in which P is calculated in dependence on percentile values of neu for pixels in the clipped region.

**36.** A method according to claim 2, further comprising the step of, after values for the clipped channel of any or all singly clipped pixels have been estimated, estimating the values for the clipped channels of one or more doubly clipped pixels by adjusting one or more parameters of the doubly clipped pixels in dependence on information obtained from the unclipped channel of the one or more doubly clipped pixels and from one or more unclipped pixels near to said one or more doubly clipped pixels.

**37.** A method according to claim 36, in which the one or more parameters include the hue and/or saturation of the doubly clipped pixels and in which the step of estimating comprises the steps of:

identifying a region of shadow or highlight doubly-clipped pixels;
identifying a near doubly-clipped pixel region of pixels near said region of shadow or highlight doubly-clipped pixels;
transforming the near doubly clipped pixel region to an orthogonal tri-colour space having a neutral component U and colour components V and W and wherein if Z, X and Y are the linear values, in any order, of the red, green and blue channels in each pixel, Z and X being clipped, and Y being unclipped, orthogonal tri-colour space equations are solved for Z and X, given predetermined values of V, W and Y.

**38.** A method according to claim 37, in which the tri-colour space is defined by the following transform equations:

$$neu = (r + g + b)/\sqrt{3}$$

$$gm = (2g - r - b)/\sqrt{6}$$

$$ill = (b - r)/\sqrt{2}$$

in which gm and ill are the colour components V and W;
neu is the neutral component U; and,
r, g and b are the logarithms of the red, green and blue linear intensities of the channels of pixels being transformed.

**39.** A method according to claim 38, comprising the steps of:

selecting values of gm and ill, $gm_{sel}$ and $ill_{sel,}$ that correspond to the colour of pixels in the near doubly clipped pixel region; and,
estimating new values for the clipped channels in the doubly clipped region in accordance with predetermined equations.

**40.** A method according to claim 39, in which the doubly clipped pixels are clipped in the red and green channels and the equations used to estimate a value for each of the clipped channels are:

$$r_{est} = b - \sqrt{2}.ill_{sel}$$

$$g_{est} = (\sqrt{6}/2)\ gm_{sel} - (1/\sqrt{2})\ ill_{sel} + b$$

in which b is the logarithm of the blue linear intensity of pixels in the doubly clipped region and $r_{est}$, $g_{est}$ are the estimated values of r and g for pixels in the doubly clipped pixel region.

41. A method according to claim 39, in which the doubly clipped pixels are clipped in the red and blue channels and the equations used to estimate a value for each of the clipped channels are:

$$r_{est} = g - (1/\sqrt{2}).ill_{sel} - (\sqrt{6}/2).gm_{sel}$$

$$b_{est} = (1/\sqrt{2}).ill_{sel} - (\sqrt{6}/2)gm_{sel} + g$$

in which g is the logarithm of the green linear intensity of pixels in the doubly clipped region and $r_{est}$, $b_{est}$ are the estimated values of r and b for pixels in the doubly clipped pixel region.

42. A method according to claim 39, in which the doubly clipped pixels are clipped in the blue and green channels and the equations used to estimate a value for each of the clipped channels are:

$$g_{est} = (1/\sqrt{2}).ill_{sel} + (\sqrt{6}/2).gm_{sel} + r$$

$$b_{est} = \sqrt{2}.ill_{sel} + r$$

in which r is the logarithm of the red linear intensity of pixels in the doubly clipped region and $g_{est}$, $b_{est}$ are the estimated values of g and b for pixels in the doubly clipped pixel region.

43. A method according to claim 39, in which a 2-dimensional gm,ill histogram is formed from the near doubly-clipped pixels and based on the 2-dimensional gm,ill histogram, the values of gm and ill selected are the respective mode values $gm_{mode}$ and $ill_{mode}$.

44. A method according to claim 39, in which the step of identifying a doubly-clipped pixel region comprises the step of identifying pixels that satisfy one of the two following conditions for highlight clipping and shadow clipping respectively:

$$(X \geq (X_{h,cl} - N_c))\ \&\ (Y \geq (Y_{h,cl} - N_c))\ \&\ (Z \leq (Z_{h,cl} - N_c))$$

or,

$$(X \leq (X_{s,cl} + N_c))\ \&\ (Y \leq (Y_{s,cl} + N_c))\ \&\ (Z \geq (Z_{s,cl} + N_c))$$

in which X, Y and Z are the values of the channels in each pixel;
$X_{h,cl}$, $Y_{h,cl}$ and $Z_{h,cl}$ are the limit of the range of possible values of X, Y and Z respectively at which highlight clipping occurs;
$X_{s,cl}$, $Y_{s,cl}$ and $Z_{s,cl}$ are the limit of the range of possible values of X, Y and Z respectively at which shadow clipping occurs; and,
$N_c$ is a value used to define a clipped threshold.

45. A method according to claim 40, further comprising the step of constraining the linear values of $R_{est}$ and $G_{est}$ to a predetermined range, in which $R_{est}$ and $G_{est}$ are the linear equivalents of $r_{est}$, $g_{est}$.

46. A method according to claim 41, further comprising the step of constraining the linear values of $R_{est}$ and $B_{est}$ to a predetermined range, in which $R_{est}$ and $B_{est}$ are the linear equivalents of $r_{est}$, $b_{est}$.

**47.** A method according to claim 42, further comprising the step of constraining the linear values of $B_{est}$ and $G_{est}$ to a predetermined range, in which $B_{est}$ and $G_{est}$ are the linear equivalents of $b_{est}$, $g_{est}$.

**48.** A method according to claim 39, in which the step of identifying a near doubly clipped region of pixels within the image comprises selecting one or more unclipped pixels near to said one or more doubly clipped pixels, identified in dependence on their distance from the one or more doubly clipped pixels.

**49.** A method according to claim 48, in which the one or more unclipped pixels near to said one or more doubly clipped pixels are identified by expanding the area covered by said identified doubly clipped pixels by a predetermined proportion and subtracting the area covered by said identified doubly clipped pixels.

**50.** A method according to claim 49, in which the step of identifying the near doubly clipped region of pixels, further comprises, after the step of expanding the area covered by said identified doubly clipped pixels, the step of excluding any pixels from the near doubly clipped region that do not satisfy one or more predetermined requirements.

**51.** A method according to claim 36, in which values for the channels of doubly clipped pixels having each of the possible combinations of doubly clipped channels are estimated in sequence.

**52.** A method according to claim 44, in which each region of doubly clipped pixels is made up of pixels that satisfy only one of the two conditions.

**53.** A method according to claim 36, in which after values have been estimated for the clipped channels in one or more doubly clipped pixels, the tonescale of all pixels in said image is adjusted.

**54.** A method according to claim 37, in which estimation is only performed if the region is larger than a predetermined threshold number of pixels.

**55.** A method according to claim 54, in which the threshold number of pixels is determined such that the region will be visible to the unaided eye of a viewer in a final output of the image.

**56.** A method according to claim 54, in which the threshold number of pixels is up to 0.02% of the total number of pixels in the image.

**57.** A method according to claim 54, in which if estimation is not performed a pixel correction method is activated to provide a corrected value for the clipped channel of said unestimated pixels.

**58.** A method according to claim 36 further comprising the step of, after the values for the clipped channels of any or all doubly clipped pixels have been estimated, estimating values for the clipped channels of one or more triply clipped pixels in a multi-channel image in dependence on information obtained from one or more unclipped pixels near to said one or more triply clipped pixels.

**59.** A method according to claim 49, comprising the step of identifying triply clipped pixels by selecting all pixels that satisfy one of the two following conditions, for highlight clipping and shadow clipping respectively:

$$(X \geq (X_{h,cl} - N_c)) \ \& \ (Y \geq (Y_{h,cl} - N_c)) \ \& \ (Z \geq (Z_{h,cl} - N_c))$$

or,

$$(X \leq (X_{s,cl} + N_c)) \ \& \ (Y \leq (Y_{s,cl} + N_c)) \ \& \ (Z \leq (Z_{s,cl} + N_c))$$

in which X, Y and Z are the values of the channels in each pixel;
$X_{h,cl}$, $Y_{h,cl}$ and $Z_{h,cl}$ are the limit of the range of possible values of X, Y and Z respectively at which highlight clipping occurs;
$X_{s,cl}$, $Y_{s,cl}$ and $Z_{s,cl}$ are the limit of the range of possible values of X, Y and Z respectively at which shadow clipping occurs; and,
$N_c$ is a value used to define a clipped threshold.

**60.** A method according to claim 59, further comprising the step of forming triply clipped pixel regions made up of pixels each of which satisfies the same one of the two conditions.

**61.** A method according to claim 60, in which estimation is only performed if the triply clipped pixel region is larger than a predetermined threshold number of pixels.

**62.** A method according to claim 61, in which the threshold number of pixels is determined such that the region will be visible to the unaided eye of a viewer in a final output of the image.

**63.** A method according to claim 61, in which the threshold number of pixels is up to 0.02% of the total number of pixels in the image.

**64.** A method according to claim 61, in which if estimation is not performed a pixel correction method is activated to provide a corrected value for the clipped channel of said unestimated pixels.

**65.** A method according to claim 58, in which the one or more unclipped pixels near to said one or more triply clipped pixels are identified in dependence on their distance from the one or more triply clipped pixels.

**66.** A method according to claim 58, in which the one or more unclipped pixels near to said one or more triply clipped pixels are identified by expanding the area covered by said identified triply clipped pixels by a predetermined proportion and subtracting the area covered by said identified triply clipped pixels.

**67.** A method according to claim 58, further comprising the step of determining selected values $R_{sel}$, $G_{sel}$ and $B_{sel}$ representative of red, green and blue values R, G, B of the near triply clipped pixels.

**68.** A method according to claim 67, in which the selected values $R_{sel}$, $G_{sel}$ and $B_{sel}$ representative of R, G, B values of the near triply clipped pixels are the most commonly occurring value of R, G and B, $R_{mode}$, $G_{mode}$ and $B_{mode}$ in a RGB histogram of pixels in the near triply-clipped region.

**69.** A method according to claim 67, comprising the step of setting the RGB values of all pixels in the triply clipped pixel region to the values of $R_{sel}$, $G_{sel}$ and $B_{sel}$.

**70.** A method according to claim 60, comprising the step of determining parameters of a surface model from the region of near triply clipped pixels and applying the surface model to the triply clipped region.

**71.** A method according to claim 70, in which the parameters of the surface are determined using a least squares method.

**72.** A method according to claim 58, in which after values have been estimated for the clipped channels in the one or more triply clipped pixels, the tonescale of all pixels in said image is adjusted.

**73.** A digital image processor comprising processing means adapted to estimate a value for a clipped channel of one or more singly clipped pixels in a digital image in dependence on information obtained from the unclipped channels of said one or more singly clipped pixels and from one or more unclipped pixels near to said one or more singly clipped pixels.

**74.** A processor according to claim 73, further adapted to group together the one or more singly clipped pixels in clipped regions and estimate a value for the clipped channel of each of the pixels in the clipped region collectively, the processor being controlled such that when there is a variation in hue and/or saturation over a singly clipped pixel region, the processor is adapted to transform near singly clipped pixels into a related transform space, group the transformed near singly clipped pixels into areas defined by coordinates in the transform space, calculate regression coefficients for each area and storing the regression coefficients in a binning array, determine coordinates for the singly clipped pixels in the transform space and reconstruct the clipped channel for each region of pixels in the clipped region using the regression coefficients corresponding to a group of the transformed near singly clipped pixels in the transform space.

**75.** A processor according to claim 73, further adapted to, after values for the clipped channel of any or all singly clipped pixels have been estimated, estimate values for the clipped channels one or more doubly clipped pixels by adjusting one or more parameters of the doubly clipped pixels in dependence on information obtained from the unclipped channel of the one or more doubly clipped pixels and from one or more unclipped pixels near to said one or more doubly clipped pixels.

**76.** A processor according to claim 75, further adapted to, after values for the clipped channels of any or all doubly clipped pixels have been estimated, estimate values for the clipped channels of one or more triply clipped pixels in a digital image in dependence on information obtained from one or more unclipped pixels near to said one or more triply clipped pixels.

**77.** A digital camera, comprising:

capture means to capture a pixelated digital image of an object;
processing means adapted to estimate a value for a clipped channel of one or more singly clipped pixels in the pixelated digital image in dependence on information obtained from the unclipped channels of said one or more singly clipped pixels and from one or more unclipped pixels near to said one or more singly clipped pixels.

**78.** A camera according to claim 77, in which the processing means is further adapted to estimate values for the clipped channels of any or all doubly clipped pixels from said pixelated image by adjusting a parameter of the doubly clipped pixels to blend with that of surrounding unclipped pixels after a value for the clipped channel of any or all singly clipped pixels has been estimated.

**79.** A camera according to claim 78, in which the processing means is further adapted to estimate values for the clipped channels of any or all triply clipped pixels by blending said triply clipped pixels in with surrounding near triply clipped pixels after values for the clipped channels of any or all doubly clipped pixels have been estimated.

**80.** A camera according to claim 77, in which the processing means comprises a microprocessor.

**81.** A camera according to claim 77, in which the camera is a digital video camera and the pixelated images are frames of video captured by said camera.

**82.** A digital photofinishing system, comprising:

input means to receive a pixelated digital image to be processed; and,
processing means adapted to estimate a value for the clipped channel of one or more singly clipped pixels in the pixelated digital image in dependence on information obtained from the unclipped channels of said one or more singly clipped pixels and from one or more unclipped pixels near to said one or more singly clipped pixels.

**83.** A digital photofinishing system according to claim 82, in which the processing means is further adapted to estimate values for the clipped channels of one or more doubly clipped pixels from said pixelated image by adjusting a parameter of the doubly clipped pixels to blend with that of surrounding unclipped pixels after values have been estimated for the clipped channel of any or all singly clipped pixels.

**84.** A digital photofinishing system according to claim 83, in which the processing means is further adapted to estimate values for the clipped channels of any or all triply clipped pixels by blending said triply clipped pixels in with surrounding near triply clipped pixels after values have been estimated for the clipped channels of any or all doubly clipped pixels.

**85.** A digital photofinishing system according to claim 82, in which the processing means comprises a computer in communication with an image processing algorithm database, comprising one or more image processing algorithms, at least one of which, when run on the computer causes the computer to execute the steps of the method of claim 1 on a received image.

**86.** A digital photofinishing system according to claim 82, comprising output means adapted to produce an output format of the processed image.

**87.** A digital photofinishing system according to claim 82, in which the output means comprises a CD writer.

**88.** A digital photofinishing system according to claim 82, in which the output means comprises a digital photographic printer for writing the processed image onto photographic material.

**89.** A computer program comprising program code means for performing all the steps of claim 1 when said program is run on a computer.

**90.** A computer program product comprising program code means stored on a computer readable medium for performing the method of claim 1 when said program product is run on a computer.

**91.** A method of image processing, comprising the steps of:

identifying pixels in a multi-channel image where at least one channel value is clipped;
generating a declipping relationship based on channel values from pixels that are not clipped; and,
applying said declipping relationship to declip clipped channel values at said identified pixels.

*FIG. 1*

EP 1 367 538 A2

INPUT IMAGE

IDENTIFY HIGHLIGHT AND SHADOW
CLIP VALUES FOR EACH CHANNEL — 1

IDENTIFY PIXELS WHICH HAVE
CLIPPED IN A SINGLE CHANNEL — 2

FIND NEAR-CLIP PIXELS — 4

USE INFORMATION IN NEAR-CLIPPED
PIXELS AND THE UNCLIPPED CHANNELS
TO ESTIMATE SINGLY CLIPPED PIXELS — 6

IDENTIFY PIXELS WHICH HAVE
CLIPPED IN TWO CHANNELS — 8

FIND NEAR-CLIP PIXELS — 10

USE INFORMATION IN NEAR-CLIPPED
PIXELS AND THE UNCLIPPED CHANNELS
TO ESTIMATE DOUBLY CLIPPED PIXELS — 12

IDENTIFY PIXELS WHICH HAVE
CLIPPED IN ALL THREE CHANNELS — 14

FIND NEAR-CLIP PIXELS — 16

USE INFORMATION IN NEAR-CLIPPED
PIXELS TO SET THE VALUE OF
TRIPLY CLIPPED PIXELS — 18

ADJUST THE TONESCALE OF THE — 20
IMPROVED IMAGES

## FIG. 2

SELECT R,G OR B CHANNEL — *22*

↓

IF CLIPPED REGION EXISTS, IDENTIFY NEAR—CLIP PIXELS — *24*

↓

FIND REGRESSION COEFFICIENTS, $A_0$, $A_1$ AND $A_2$ FROM NEAR—CLIP PIXELS — *26*

↓

ESTIMATE CLIPPED CHANNEL VALUES IN CLIPPED REGION USING REGRESSION EQUATION — *28*

↓

SUBSTITUTE CLIPPED CHANNEL VALUES WITH ESTIMATED CODE VALUES — *30*

↓

REPEAT ESTIMATION FOR OTHER CLIPPED CHANNELS

*FIG. 3*

INPUT CLIPPED PIXEL REGION — *38*

↓

DILATE CLIP REGION — *40*

$+$ / $-$ *42*

↓

REMOVE ALL NEAR—CLIP PIXELS WHICH ARE CLASSIFIED AS DOUBLY POR TRIPLY CLIPPED

↓

NEAR—CLIP REGION A

*FIG. 5*

FIG. 4

BIN NUMBER

FIG. 6

FIG. 7

FIG. 14

FIG. 8

FIG. 9A

FIG. 9B

Fig.10

Fig.11

Fig.12

*FIG. 13*

50 — FOR ALL PIXELS IN A CLIPPED REGION

52 — FIND GM, ill AND CALCULATE $gm_c$, $ill_c$

54 — APPLY CORRECTION FACTOR $gm'_{est} = gm + gm_c$ $ill'_{est} = ill + ill_c$

56 — REFERENCE REGRESSION COEFFICIENTS $(a_0, a_1, a_2) = H(gm'_{est}, ill'_{est})$

58 — EXTRAPOLATE CLIPPED REGION $Z = a_0 + a_1X + a_2Y$

60 — CONSTRAIN EXTRAPOLATED VALUES TO THE RANGE 1.0 TO 1.8

UNCLIPPED OR ESTIMATED
SINGLY CLIPPED PIXELS

ESTIMATE DOUBLY CLIPPED
RED AND GREEN USING BLUE

ESTIMATE DOUBLY CLIPPED
RED AND BLUE USING GREEN

ESTIMATE DOUBLY CLIPPED
GREEN AND BLUE USING RED

*FIG. 15*

IMPROVED IMAGE

INPUT DEVICE

PROCESSOR

82

OUTPUT DEVICE

84

80

*FIG. 17*

INPUT IMAGE WITH ESTIMATED SINGLY CLIPPED PIXELS — 70

FORM A LIST OF DOUBLY CLIPPED PIXELS AND LABEL ALL REGIONS WITH CONNECTED CLIPPED PIXELS — 72

REPEAT FOR EACH CLIP REGION WITH NUMBER OF PIXELS>0.02% OF TOTAL NIMBER OF PIXELS IN IMAGE

GENERATE NEAR−CLIP PIXELS AND CONVERT TO T−SPACE — 74

SELECT gm AND ILLUMINAT VALUES FROM NEAR−CLIPPED PIXELS — 76

EXTRAPOLATE CLIPPED PIXELS WITH CONSTRAINTS — 78

ESTIMATE TRIPLY CLIPPED PIXELS

*FIG. 16*

EP 1 367 538 A2

FIG. 18A

FIG. 18B

FIG. 18

START — 86

BUILD A LIST UNESTIMATED SINGLY,
DOUBLY AND TRIPLY CLIPPED PIXELS — 88

SET $P_{SEL}$ TO FIRST CLIPPED PIXEL — 90

92 — PROJECT LINE SEGMENT, $n$, AND OBTAIN THE SET
OF PIXELS FROM THE EXTENDED LINE SEGMENT

DETERMINE THE MAXIMUM PIXEL VALUE
FOR THE LINE SEGMENT, $n$. — 94

DETERMINE THE DISTANCE, $d$ BETWEEN $P_{SEL}$ AND
THE FIRST NON-CLIPPED PIXEL IN THE LINE SEGMENT — 96

100 — INCREMENT
LINE SEGMENT
COUNTER, $n$

98 — ARE ALL
LINE SEGMENTS
PROCESSED?

NO

116 — SET $P_{SEL}$ TO
NEXT CLIPPED
PIXEL

YES

CALCULATE THE MAXIMUM LINE SEGMENT
LENGTH, $d_{MAX} = MAX(d_n)$ — 102

CALCULATE THE SCALE FACTORS, $S_n$ — 104

*FIG. 18A*

Ⓐ

Ⓑ

$$W_n = \frac{S_n \, d_{max}}{d_n}$$

106 — CALCULATE THE WEIGHTS,

$$W_n' = \frac{W_n}{\sum W_n}$$

108 — NORMALISE THE WEIGHTS,

110 — ESTIMATE THE CLIPPED PIXEL CHANNEL VALUE(s)

112 — STORE THE ESTIMATED VALUE(S) IN THE CORRECTED IMAGE.

114 — REACHED END OF CLIPPED PIXEL LIST?

118 — OUTPUT CORRECTED IMAGE

120 — END

*FIG. 18B*

86

FIG. 19

EP 1 367 538 A2